(19) Europäisches Patentamt
European Patent Office
Office européen des brevets

(11) **EP 4 644 850 A1**

(12) **EUROPEAN PATENT APPLICATION**
published in accordance with Art. 153(4) EPC

(43) Date of publication:
05.11.2025 Bulletin 2025/45

(21) Application number: 23911465.5

(22) Date of filing: 22.11.2023

(51) International Patent Classification (IPC):
*G01J 3/36* (2006.01)          *G01J 3/51* (2006.01)
*G02B 5/26* (2006.01)          *G02B 5/28* (2006.01)
*H04N 23/12* (2023.01)         *H04N 25/70* (2023.01)

(52) Cooperative Patent Classification (CPC):
G01J 3/36; G01J 3/51; G02B 5/26; G02B 5/28;
H04N 23/12; H04N 25/70

(86) International application number:
PCT/JP2023/041925

(87) International publication number:
WO 2024/142683 (04.07.2024 Gazette 2024/27)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.12.2022 JP 2022209176

(71) Applicant: **Panasonic Intellectual Property
Management Co., Ltd.**
**Kadoma-shi, Osaka 571-0057 (JP)**

(72) Inventor: **YAKO, Motoki**
**Kadoma-shi, Osaka 571-0057 (JP)**

(74) Representative: **Grünecker Patent- und
Rechtsanwälte
PartG mbB
Leopoldstraße 4
80802 München (DE)**

(54) **OPTICAL DETECTING DEVICE, OPTICAL DETECTING SYSTEM, AND FILTER ARRAY**

(57)     A light detection apparatus includes N pixels the number of which is N. Each of the N pixels includes an optical filter and a light detection element that detects light having passed through the optical filter. Information on four or more wavelength bands included in a target wavelength range is superimposed on a signal outputted from the light detection element. Let $\mu_i$ be an average of values of an effective sensitivity of an i-th pixel (i = 1, 2, ..., N) among the N pixels in the target wavelength range based on a wavelength dependency of a transmittance of the optical filter included in the i-th pixel and a wavelength dependency of a detection sensitivity of the light detection element included in the i-th pixel. Let $\mu_{min}$ be a minimum value among $\mu_1$ to $\mu_N$. Given these definitions, $\mu_{min}/(\Sigma_i \mu_i/N) > 0.5$.

FIG. 8

EP 4 644 850 A1

**Description**

Technical Field

The present disclosure relates to a light detection apparatus, a light detection system, and a filter array.

Background Art

Compressed sensing is a technique for reconstructing more data than observed, by assuming that the distribution of data that is the target of observation is sparse in a certain space, such as a frequency space. Compressed sensing can be applied to, for example, an imaging apparatus that reconstructs an image including more information from a small number of observation data. An imaging apparatus to which compressed sensing is applied generates a reconstructed image through arithmetic operation from an image in which spectral information of a target is compressed. As a result, various effects on images, for example, higher resolution, wavelength expansion, shorter imaging time, higher sensitivity, and the like can be obtained.

PTL 1 discloses an example in which the technology of compressed sensing is applied to a hyperspectral camera that acquires images in wavelength bands each of which has a narrow bandwidth. The technology disclosed in PTL 1 realizes a hyperspectral camera that generates a high-resolution multi-wavelength image.

Citation List

Patent Literature

PTL 1: Specification of U.S. Patent No. 9,599,511

Summary of Invention

The present disclosure provides a light detection apparatus that can be used for a hyperspectral camera and is capable of reducing the influence of noise.

A light detection apparatus according to an aspect of the present disclosure is a light detection apparatus comprising: pixels a number of which is N, each of the N pixels including an optical filter and a light detection element, the light detection element detecting light having passed through the optical filter, wherein information on four or more wavelength bands included in a target wavelength range is superimposed on a signal outputted from the light detection element, let $\mu_i$ be an average of values of an effective sensitivity of an i-th pixel (i = 1, 2, ..., N) among the N pixels in the target wavelength range based on a wavelength dependency of a transmittance of the optical filter included in the i-th pixel and a wavelength dependency of a detection sensitivity of the light detection element included in the i-th pixel, let $\mu_{min}$ be a minimum value among $\mu_1$ to $\mu_N$, and

[Expression 1]

$$\frac{\mu_{min}}{\left(\sum_{i=1}^{N} \mu_i/N\right)} \geqq 0.5$$

Comprehensive or specific aspects of the present disclosure may be realized in the form of a system, an apparatus, a method, an integrated circuit, a computer program, or a computer-readable storage medium such as a recording disk, or in any combination of a system, an apparatus, a method, an integrated circuit, a computer program, and a storage medium. The computer-readable storage medium could encompass a nonvolatile storage medium such as a compact disc read-only memory (CD-ROM). The apparatus may have a single-device configuration or a multiple-device configuration. In a case where the apparatus is comprised of two or more devices, the two or more devices may be disposed in a single piece of equipment or may be disposed in two or more separate pieces of equipment in a divided manner. In this specification and the appended claims, the term "apparatus" could have not only a meaning of a single device but also a meaning of a system that includes multiple devices.

According to the technology of the present disclosure, a light detection apparatus that can be used for a hyperspectral camera and is capable of reducing the influence of noise is realized.

Brief Description of Drawings

[Fig. 1A] Fig. 1A is a diagram schematically illustrating an example of the configuration of a light detection system.

[Fig. 1B] Fig. 1B is a diagram schematically illustrating another example of the configuration of a light detection system.

[Fig. 1C] Fig. 1C is a diagram schematically illustrating still another example of the configuration of a light detection system.

[Fig. 1D] Fig. 1D is a diagram schematically illustrating still another example of the configuration of a light detection system.

[Fig. 2A] Fig. 2A is a diagram schematically illustrating an example of a filter array.

[Fig. 2B] Fig. 2B is a diagram illustrating an example of the spatial distribution of the transmittance of light in each of wavelength bands included in a target wavelength range.

[Fig. 2C] Fig. 2C is a diagram illustrating an example of the spectral transmittance of a region A1 included in the filter array illustrated in Fig. 2A.

[Fig. 2D] Fig. 2D is a diagram illustrating an example of the spectral transmittance of a region A2 included in the filter array illustrated in Fig. 2A.

[Fig. 3A] Fig. 3A is a diagram for explaining an example of a relationship between the target wavelength range and the wavelength bands that are included therein.

[Fig. 3B] Fig. 3B is a diagram for explaining another example of a relationship between the target wavelength range and the wavelength bands that are included therein.

[Fig. 4A] Fig. 4A is a diagram for explaining the characteristics of the spectral transmittance of a certain region in a filter array.

[Fig. 4B] Fig. 4B is a diagram illustrating a result of band-by-band averaging of the spectral transmittance illustrated in Fig. 4A.

[Fig. 5] Fig. 5 is a diagram illustrating, for each of a case where the noise is 0% and a case where the noise is 2%, a compressed image and an error map of a reconstructed image regarding a certain wavelength band.

[Fig. 6] Fig. 6 is a graph that shows a relationship between the luminance value of each pixel included in a compressed image and an amount of increase in a reconstruction error at the corresponding pixel included in a hyperspectral image in the case where the noise is 2%.

[Fig. 7] Fig. 7 is a graph that shows a measurement result of a relationship between luminance values in a compressed image and an amount of noise.

[Fig. 8] Fig. 8 is a graph that shows a relationship between the luminance value of each pixel included in a compressed image and an amount of increase in a reconstruction error at the corresponding pixel included in a hyperspectral image in a case where noise measured actually is superimposed on the compressed image.

[Fig. 9A] Fig. 9A is a diagram illustrating an example of a compressed image regarding different $\mu_{min}/(\Sigma_i\mu_i/N)$ in a case where the target is a white board.

[Fig. 9B] Fig. 9B is a graph that shows an example of histograms obtained from the luminance values of the compressed image regarding different $\mu_{min}/(\Sigma_i\mu_i/N)$.

[Fig. 10A] Fig. 10A is a diagram schematically illustrating an example of a target.

[Fig. 10B] Fig. 10B is a diagram schematically illustrating an example of a filter array.

[Fig. 10C] Fig. 10C is a diagram schematically illustrating an example of a compressed image.

[Fig. 11] Fig. 11 is a diagram schematically illustrating an example of a filter array that is versatile.

[Fig. 12] Fig. 12 is a flowchart schematically illustrating an example of a method of manufacturing a filter array.

[Fig. 13A] Fig. 13A is a diagram schematically illustrating a spatial pattern of the luminance values of a compressed image regarding light in each of the wavelength bands.

[Fig. 13B] Fig. 13B is a diagram schematically illustrating an example of a histogram obtained from the luminance values of a compressed image regarding light in the k-th wavelength band.

[Fig. 14] Fig. 14 is a diagram schematically illustrating an example of a compressed image with random noise superimposed thereon.

[Fig. 15A] Fig. 15A is a diagram illustrating an example of the transmission spectrum of a certain filter included in a filter array.

[Fig. 15B] Fig. 15B is a diagram illustrating an average value of MSE between a ground truth image and a reconstructed image regarding five wavelength bands in a case where random noise is superimposed on a compressed image.

[Fig. 16] Fig. 16 is a diagram illustrating a relationship between an average value of MSE between a ground truth image and a reconstructed image regarding wavelength bands and $M_k = \mu_k - \sigma_k$ in a case where $\sigma_k = 0.08$.

[Fig. 17A] Fig. 17A is a diagram illustrating a relationship between an average value of MSE between a ground truth image and a reconstructed image regarding wavelength bands and $M_k = \mu_k - \sigma_k$ in a case where $\sigma_k = 0.05$.
[Fig. 17B] Fig. 17B is a diagram illustrating a relationship between an average value of MSE between a ground truth image and a reconstructed image regarding wavelength bands and $M_k = \mu_k - \sigma_k$ in a case where $\sigma_k = 0.07$.
[Fig. 17C] Fig. 17C is a diagram illustrating a relationship between an average value of MSE between a ground truth image and a reconstructed image regarding wavelength bands and $M_k = \mu_k - \sigma_k$ in a case where $\sigma_k = 0.1$.
[Fig. 18A] Fig. 18A is a diagram schematically illustrating a first example of a filter array.
[Fig. 18B] Fig. 18B is a diagram schematically illustrating a second example of a filter array.
[Fig. 19A] Fig. 19A is a diagram illustrating an example of optical filters and light detectors.
[Fig. 19B] Fig. 19B is a diagram illustrating an example of optical filters and light detectors.
[Fig. 19C] Fig. 19C is a diagram illustrating, when an optical filter $f_i$ receives light $lin_i$ from the subject, the optical filter $f_i$ outputs light $lout_i$, and a light detector $d_i$ outputs a signal $s_i$ upon detecting the light $lout_i$.

Description of Embodiments

In the present disclosure, all or some of circuits, units, devices, members, or portions, or all or some of functional blocks of a block diagram, may be implemented by, for example, one or more electronic circuits including a semiconductor device, a semiconductor integrated circuit (IC), or a large-scale integration circuit (LSI). The LSI or the IC may be integrated in a single chip or may be configured as a combination of chips. For example, functional blocks other than a storage element may be integrated in a single chip. Though the term LSI or IC is used here, its denomination could vary depending on the degree of integration, and the one referred to as a system LSI, a very-large-scale integration circuit (VLSI), or an ultra-large-scale integration circuit (ULSI) may be employed. A field-programmable gate array (FPGA), which is programmed after LSI manufacturing, or a reconfigurable logic device, which allows reconfiguration of interconnection inside the LSI or setup of circuit sectioning inside the LSI, can also be used for the same purpose.

Furthermore, all or some of functions or operations of the circuits, the units, the devices, the members, or the portions can be executed through software processing. In this case, the software is stored in one or more non-transitory storage media, such as a ROM, an optical disc, or a hard disk drive, and the function identified by the software is executed by a processing device (processor) and a peripheral device when the software is run by the processing device (processor). The system or the apparatus may include the one or more non-transitory storage media in which the software is stored, the processing device (processor), and a hardware device that is needed, for example, an interface.

In the present disclosure, the term "light" could refer to not only visible light (wavelengths from about 400 nm to about 700 nm) but also electromagnetic waves, including ultraviolet rays (wavelengths from about 10 nm to about 400 nm) and infrared rays (wavelengths from about 700 nm to about 1 mm).

Exemplary embodiments of the present disclosure will now be described. Note that all of the embodiments to be described below are intended to show comprehensive or specific examples. Numerical values, shapes, constituent elements, the arrangement positions and connection forms of the constituent elements, steps, and the sequential order of the steps that will be shown in the embodiments below are just examples, and thus shall not be construed to limit the present disclosure. Among the constituent elements in the embodiments below, those that are not recited in independent claims representing the most generic concept will be described as optional constituent elements. Each drawing is schematic and is not necessarily exact. In each drawing, the same reference signs are assigned to constituent elements that are substantially identical, and description thereof may be omitted or simplified for avoiding redundancy.

Prior to describing the embodiments of the present disclosure, findings that underlie the present disclosure will now be described.

Sparsity is a property that elements characterizing the target of observation are present in a certain space, such as a frequency space, in a sparse manner. Sparsity is widely observed in the natural world. Taking advantage of sparsity makes it possible to observe necessary information efficiently. Sensing technology taking advantage of sparsity is called compressed sensing. Using the compressed sensing technology makes it possible to construct highly efficient devices and systems.

As a specific application example of the compressed sensing technology, a hyperspectral camera with improved wavelength resolution has been proposed, such as the one disclosed in PTL 1, for example. Such a hyperspectral camera is provided with, for example, an optical filter that has irregular optical transmission characteristics with respect to space and/or wavelength. Such an optical filter will be referred to also as an "encoding mask". An encoding mask is disposed on an optical path of light incident on an image sensor, and allows the incident light coming in from the target to pass through itself with optical transmission characteristics that differ on a region-by-region basis. This process performed by the encoding mask will be referred to as "encoding". Spectral information of the target is compressed in an image of the target acquired through the encoding mask. This image will be referred to as a "compressed image". Mask information that shows the optical transmittance of the encoding mask is stored in advance in a storage device as a reconstruction table.

The processing device included in the hyperspectral camera performs reconstruction processing on the basis of the compressed image and the reconstruction table. Through the reconstruction processing, a reconstructed image that contains more information than contained in the compressed image, such as image information with higher resolution or image information with more wavelengths, is generated. The reconstruction table may be, for example, data representing the spatial distribution of the optical response characteristics of the encoding mask. Through the reconstruction processing based on such a reconstruction table, it is possible to generate, from a single compressed image, multiple reconstructed images corresponding respectively to multiple wavelength bands included in the target wavelength range.

In practice, various types of noise, such as readout noise, photon shot noise, and fixed pattern noise, could be superimposed on the compressed image mentioned above. The noise increases a reconstruction error in the generation of a reconstructed image.

A light detection apparatus according to an embodiment of the present disclosure that can be used for a hyperspectral camera is capable of providing a solution to this problem. The light detection apparatus includes pixels the number of which is N. Each of the N pixels includes an optical filter and a light detection element. By appropriately designing the optical filter and the light detection element that are included in each pixel, it is possible to reduce the influence of noise on the reconstructed image.

(Embodiments)

A light detection system that generates a reconstructed image from a compressed image will be described first below. Next, a first example and a second example of a light detection apparatus included in the light detection system and capable of reducing the influence of noise will be described.

[1. Light Detection System]

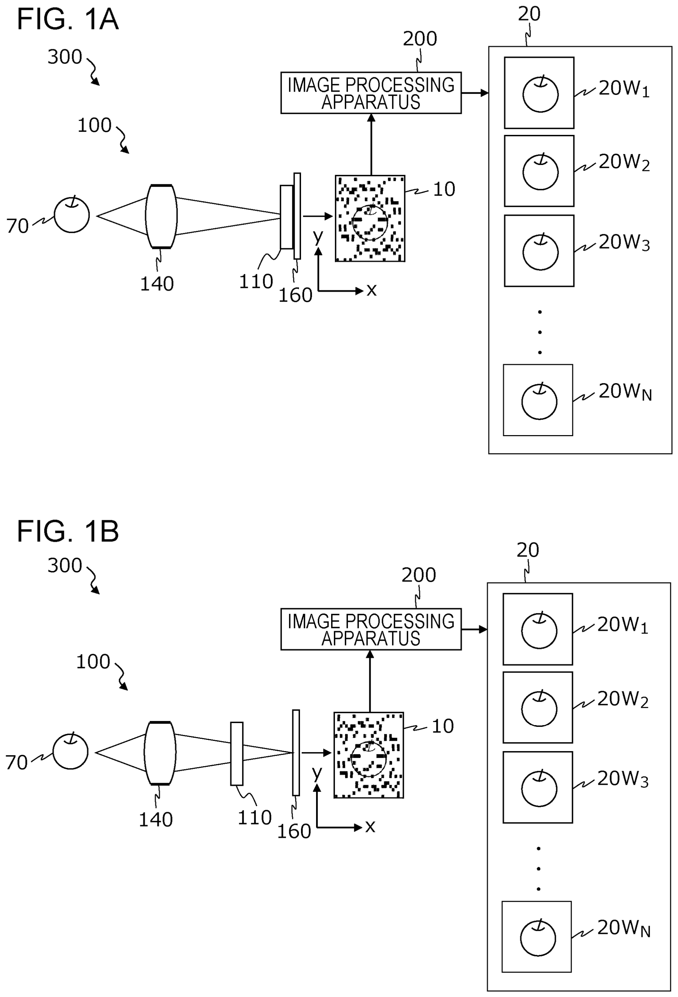

Fig. 1A is a diagram schematically illustrating an example of the configuration of a light detection system. A light detection system 300 illustrated in Fig. 1A includes a light detection apparatus 100 and an image processing apparatus 200. The light detection apparatus 100 has a configuration similar to that of the light detection apparatus disclosed in PTL 1. The light detection apparatus 100 includes an optical system 140, a filter array 110, and an image sensor 160. The optical system 140 and the filter array 110 are disposed on an optical path of incident light coming from a target 70, which is a subject. The filter array 110 in the example illustrated in Fig. 1A is disposed between the optical system 140 and the image sensor 160.

In Fig. 1A, an apple is illustrated as an example of the target 70. The target 70 is not limited to an apple, and may be any object. The image sensor 160 generates data of a compressed image 10, in which information on wavelength bands is compressed as a two-dimensional monochrome image. The image processing apparatus 200 generates image data regarding each of the wavelength bands included in a predetermined target wavelength range on the basis of the data of the compressed image 10 generated by the image sensor 160. The generated image data of the wavelength bands will sometimes be referred to as "hyperspectral image data". The number of the wavelength bands included in the target wavelength range is defined as M (where M is an integer that is greater than or equal to four). In the description below, the generated image data of the wavelength bands will be referred to as a reconstructed image $20W_1$, a reconstructed image $20W_2$, ..., and a reconstructed image $20W_M$, and these images will sometimes be collectively referred to as a "hyperspectral image 20". In this specification, data or signals that show an image, that is, a set of pieces of data or signals that represent luminance values of respective pixels, will be simply referred to also as an "image".

The filter array 110 in the present embodiment is an array of optical filters arranged in rows and columns and having translucency. The optical filter will be simply referred to as a "filter" below. These filters include more than one kind of filters having different spectral transmittances from one another, that is, having different wavelength dependencies of transmittance from one another. The number of the kinds of filters may be, for example, three, or four or more. The number of the kinds of filters, in a case of four or more, may be, for example, four, nine, sixteen, or twenty-five. The filter array 110 modulates the intensity of incident light on a wavelength-by-wavelength basis and outputs the resultant light. This process performed by the filter array 110 will be referred to as "encoding", and the filter array 110 will be referred to also as an "encoding element" or an "encoding mask".

In the example illustrated in Fig. 1A, the filter array 110 is disposed near or directly on the image sensor 160. The term "near" used here means closeness that is enough for an image of light coming from the optical system 140 to be formed on the surface of the filter array 110 in a state of having a certain degree of clearness. The phrase "directly on" means that the two are close to each other to an extent that there is almost no clearance therebetween. The filter array 110 and the image sensor 160 may be configured integrally into one.

The optical system 140 includes at least one lens. In Fig. 1A, the optical system 140 is illustrated as one lens; however, the optical system 140 may be a combination of lenses. The optical system 140 forms an image on an imaging surface of the image sensor 160 through the filter array 110.

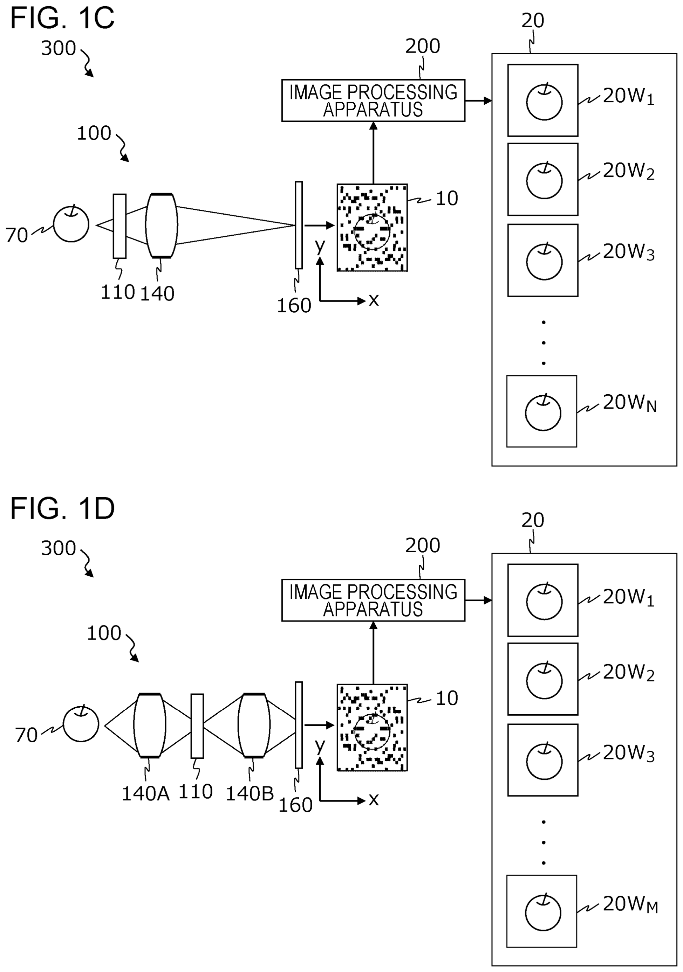

The filter array 110 may be spaced apart from the image sensor 160. Figs. 1B to 1D are diagrams illustrating examples of the configuration of the light detection apparatus 100 in which the filter array 110 is spaced apart from the image sensor 160. In the example illustrated in Fig. 1B, the filter array 110 is disposed between the optical system 140 and the image sensor 160 at a position away from the image sensor 160. In the example illustrated in Fig. 1C, the filter array 110 is disposed between the target 70 and the optical system 140. In the example illustrated in Fig. 1D, the light detection apparatus 100 includes two optical systems 140A and 140B, and the filter array 110 is disposed therebetween. As in these examples, an optical system including one or more lenses may be disposed between the filter array 110 and the image sensor 160.

The image sensor 160 is a monochrome-type light detector that includes light detection elements arranged two-dimensionally. The image sensor 160 may be, for example, a charge-coupled device (CCD), a complementary metal-oxide-semiconductor (CMOS) sensor, or an infrared array sensor. The light detection element includes, for example, a photodiode. The image sensor 160 does not necessarily have to be a monochrome-type sensor. For example, a sensor that includes a filter configured to allow red light to pass, a filter configured to allow green light to pass, and a filter configured to allow blue light to pass may be used. Alternatively, a sensor that includes a filter configured to allow red light or white light to pass, in addition to these filters, may be used. Using these kinds of sensors makes it possible to increase the amount of information regarding the wavelengths and improve the reconstruction accuracy of the hyperspectral image 20. Any wavelength region may be determined as the target wavelength range; this range is not limited to the visible wavelength region and may be the ultraviolet wavelength region, the near-infrared wavelength region, the mid-infrared wavelength region, or the far-infrared wavelength region.

The image processing apparatus 200 may be a computer including one or more processing circuits and one or more storage media, such as a memory. The image processing apparatus 200 generates, or more specifically, the one or more processing circuits generate, data of the reconstructed image $20W_1$, the reconstructed image $20W_2$, ..., and the reconstructed image $20W_M$ on the basis of the compressed image 10.

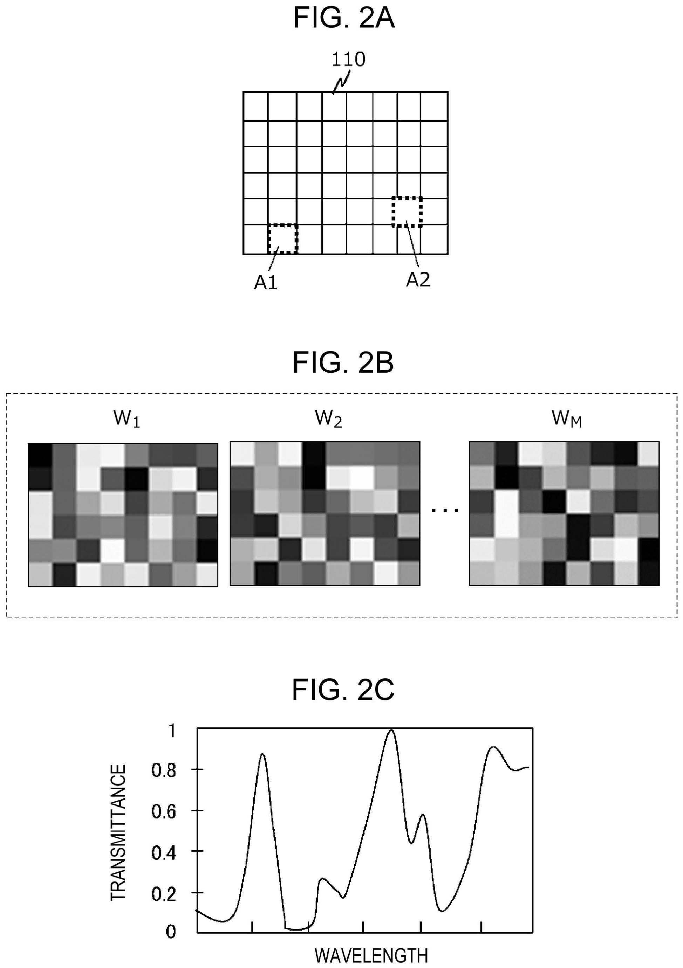

Fig. 2A is a diagram schematically illustrating an example of the filter array 110. The filter array 110 includes regions arranged two-dimensionally. In this specification, this region will sometimes be referred to as a "cell". In each region, a filter having a spectral transmittance set individually is disposed. The spectral transmittance is expressed by a function $T(\lambda)$, where $\lambda$ denotes the wavelength of incident light. The spectral transmittance $T(\lambda)$ could have a value greater than or equal to 0 and less than or equal to 1.

In the example illustrated in Fig. 2A, the filter array 110 includes forty-eight quadrangular regions arranged in six rows and eight columns. This is just an example. More regions may be provided in actual applications than in this example. For example, approximately the same number of regions as the number of the light detection elements of the image sensor 160 may be provided. The number of the regions included in the filter array 110 is determined depending on its application, for example, within a range from several tens to several tens of millions.

Fig. 2B is a diagram illustrating an example of the spatial distribution of the transmittance of light in each of a wavelength band $W_1$, a wavelength band $W_2$, ..., and a wavelength band $W_M$ included in the target wavelength range. In the example illustrated in Fig. 2B, differences in shading between the regions represent differences in transmittance. The lighter the shade of the region is, the higher the transmittance is. The darker the shade of the region is, the lower the transmittance is. As illustrated in Fig. 2B, the spatial distribution of the transmittance differs from one wavelength band to another.

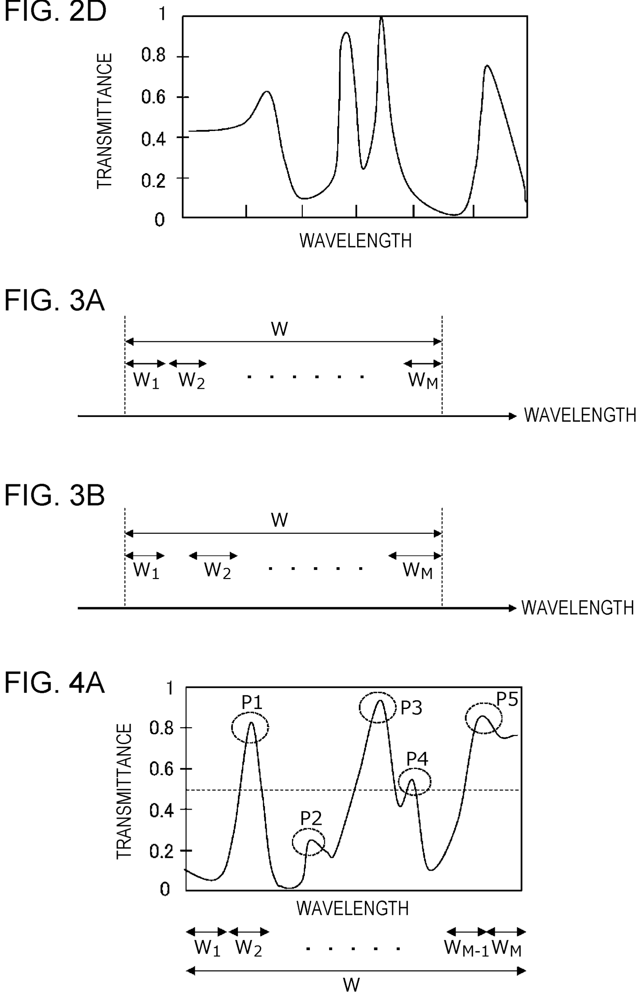

Figs. 2C and 2D are diagrams illustrating an example of the spectral transmittance of a region A1 included in the filter array 110 illustrated in Fig. 2A and an example of the spectral transmittance of a region A2 included therein, respectively. The spectral transmittance of the region A1 and the spectral transmittance of the region A2 are different from each other. As described here, the spectral transmittance of the filter array 110 differs on a region-by-region basis. Note that, however, all of the regions do not necessarily have to have different spectral transmittances from one another. At least the spectral transmittances of a part of the regions included in the filter array 110 are different from one another. The filter array 110 includes two or more filters whose spectral transmittances are different from one another. In a certain example, the number of patterns of spectral transmittances of the regions included in the filter array 110 may be the same as M, which denotes the number of the wavelength bands included in the target wavelength range, or greater. The filter array 110 may be designed such that more than half of the regions have different spectral transmittances from one another.

Figs. 3A and 3B are diagrams for explaining a relationship between a target wavelength range W and the wavelength band $W_1$, the wavelength band $W_2$, ..., and the wavelength band $W_M$ that are included therein. The target wavelength range W may be set to various ranges depending on applications. The target wavelength range W may be, for example, the wavelength region of visible light ranging from about 400 nm to about 700 nm, the wavelength region of near-infrared rays ranging from about 700 nm to about 2500 nm, or the wavelength region of near-ultraviolet rays ranging from about 10 nm to about 400 nm. Alternatively, the target wavelength range W may be the mid-infrared wavelength region, the far-infrared wavelength region, or the like. As described here, the wavelength range to be used is not limited to the visible light range. In this specification, not only visible light but also radiation in general, including infrared rays and ultraviolet rays, will be referred to as "light".

In the example illustrated in Fig. 3A, the target wavelength range W is equally divided into M segments, which are respectively defined as the wavelength band $W_1$, the wavelength band $W_2$, ..., and the wavelength band $W_M$, where M is any integer greater than or equal to four. However, this example does not imply any limitation. The wavelength bands included in the target wavelength range W may be set in any manner. For example, the bandwidths of the wavelength bands may be non-uniform. There may be a gap or an overlap between adjacent wavelength bands. In the example illustrated in Fig. 3B, the wavelength bands have different bandwidths, and there is a gap between two adjacent wavelength bands. As described here, the wavelength bands may be determined in any manner.

Fig. 4A is a diagram for explaining the characteristics of the spectral transmittance of a certain region in the filter array 110. In the example illustrated in Fig. 4A, regarding the wavelengths within the target wavelength range W, the spectral transmittance has local maximum values P1 to P5 and local minimum values. In the example illustrated in Fig. 4A, the transmittance within the target wavelength range W is normalized to have the maximum value of 1 and the minimum value of 0. In the example illustrated in Fig. 4A, the spectral transmittance has local maximum values at some wavelength bands, including the wavelength band $W_2$, the wavelength band $W_{M-1}$, and the like. As described here, the spectral transmittance of each region may be designed to have local maximum values at, at least, two among the wavelength bands included in the target wavelength range W. In the example illustrated in Fig. 4A, each of the local maximum value P1, the local maximum value P3, the local maximum value P4, and the local maximum value P5 is greater than or equal to 0.5.

As described here, the transmittance of each region differs depending on wavelength. Therefore, the filter array 110 allows a large amount of a certain wavelength-range component of incident light to pass therethrough but does not allow another wavelength-range component of the incident light to pass therethrough so much. For example, the transmittance of light at k wavelength bands among the M wavelength bands may be greater than 0.5, and the transmittance of light at the other M-k wavelength bands may be less than 0.5, where k is an integer that satisfies $2 \leq k < N$. Assuming that the incident light is white light, which includes all of the visible light wavelength components equally, the filter array 110 modulates, on a region-by-region basis, the incident light into light having discrete peaks in intensity over the wavelengths, and superposes the light of these multiple wavelengths and outputs the resultant light.

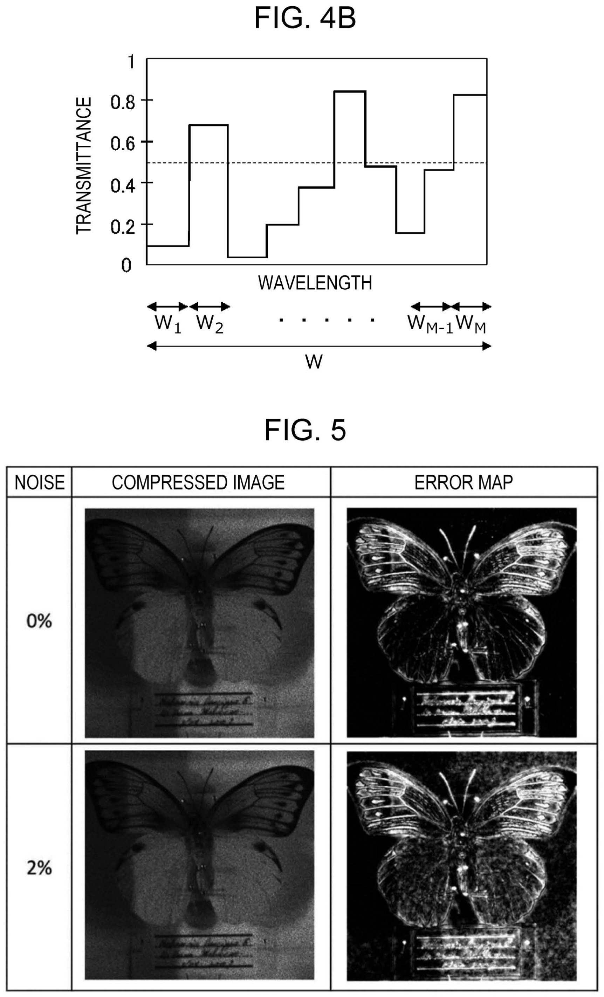

Fig. 4B is a diagram illustrating, as an example, a result of band-by-band averaging of the spectral transmittance illustrated in Fig. 4A for the wavelength band $W_1$, the wavelength band $W_2$, ..., and the wavelength band $W_M$. The average transmittance is obtained by integrating the spectral transmittance $T(\lambda)$ on a wavelength-band-by-wavelength-band basis and performing division by the bandwidth of said each wavelength band. In this specification, the value of the transmittance having been subjected to averaging on a wavelength-band-by-wavelength-band basis in this way will be treated as the transmittance at said each wavelength band. In this example, the transmittance is prominently high at the three wavelength ranges corresponding to the local maximum value P1, the local maximum value P3, and the local maximum value P5. In particular, the transmittance is greater than 0.8 at the two wavelength ranges corresponding to the local maximum value P3 and the local maximum value P5.

In the example illustrated in Figs. 2A to 2D, a gray-scale-based transmittance distribution is assumed, in which the transmittance of each region may have any value greater than or equal to 0 and less than or equal to 1. However, a gray-scale-based transmittance distribution is not always needed. For example, a binary-scale-based transmittance distribution may be adopted, in which the transmittance of each region may have either a value approximate to 0 or a value approximate to 1. In the binary-scale-based transmittance distribution, each region allows the majority portion of light to pass therethrough at, at least, two wavelength ranges among the wavelength ranges included in the target wavelength range, and does not allow the majority portion of light to pass therethrough at the rest of these wavelength ranges. The term "majority portion" as used here refers to about 80% or greater.

Some of all the cells, for example, a half of them, may be replaced with transparent regions. Such transparent regions allow light at all of the wavelength bands $W_1$ to $W_M$ included in the target wavelength range W to pass therethrough with a similar degree of high transmittance, for example, transmittance of 80% or greater. In such a configuration, the transparent regions may be arranged in a checkerboard pattern, for example. That is, the regions having transmittance different depending on wavelength and the transparent regions may be arranged in an alternating manner in two array directions of the regions in the filter array 110.

Data representing such a spatial distribution of the transmittance of the filter array 110 on a wavelength-by-wavelength basis is acquired in advance on the basis of design data or actual measurement calibration, and is stored into the storage medium of the image processing apparatus 200. This data is used in arithmetic processing to be described later.

The filter array 110 may be configured using, for example, a multi-layer film, an organic material, a diffraction grating structure, a metal-containing microstructure, or a meta-surface. As the multi-layer film, for example, a dielectric multi-layer film, or a multi-layer film including a metal layer, may be used. In this case, the cells are formed such that at least one of the thicknesses, materials, or stacking orders of the layers of the multi-layer film differs from cell to cell. This realizes spectral characteristics that differ from cell to cell. Using a multi-layer film realizes a sharp rising edge and a sharp falling edge in spectral transmittance. A configuration using an organic material can be realized by causing different cells to contain different pigments or different dyes or by causing different cells to have strata of different kinds of materials. A configuration using a diffraction grating structure can be realized by causing different cells to have structures with different diffraction pitches or different depths. A metal-containing microstructure can be fabricated using plasmon effect spectroscopy. A meta-surface can be fabricated by micro-processing a dielectric material in a size smaller than the wavelength of incident light. In this structure, the refractive index to the incident light is spatially modulated. Alternatively, the incident light may be encoded by directly processing the light detection elements included in the image sensor 160, without using the filter array 110.

From the foregoing, it can be said that the light detection apparatus 100 has light receiving regions having optical response characteristics different from one another. In a case where the light detection apparatus 100 is provided with the filter array 110 including filters and where the filters have optical transmission characteristics irregularly different from one another, the light receiving regions may be realized by the image sensor 160 near which, or directly on which, the filter array 110 is disposed. In this case, the optical response characteristics of the light receiving regions are determined on the basis of the optical transmission characteristics of the respective filters included in the filter array 110.

Alternatively, in a case where the light detection apparatus 100 is not provided with the filter array 110, the light receiving regions may be realized by, for example, the image sensor 160 having pixels directly processed to have optical response characteristics irregularly different from one another. In this case, the optical response characteristics of the light receiving regions are determined on the basis of the optical response characteristics of the respective pixels included in the image sensor 160.

The above-described multi-layer film, organic material, diffraction grating structure, metal-containing microstructure, or meta-surface can perform encoding of incident light as long as they are configured to perform modulation such that spectral transmittance differs depending on position on a two-dimensional plane. Therefore, the above-described multi-layer film, organic material, diffraction grating structure, metal-containing microstructure, or meta-surface need not have a configuration in which filters are disposed in an array.

Next, an example of signal processing performed by the image processing apparatus 200 will be described. The image processing apparatus 200 reconstructs the hyperspectral image 20, which is a multi-wavelength image, on the basis of the compressed image 10 outputted from the image sensor 160 and the spatial distribution characteristics of the transmittance of the filter array 110 on a wavelength-by-wavelength basis. The term "multi-wavelength" as used here means, for example, more wavelength ranges than 3-color wavelength ranges of red, green, and blue acquired by an ordinary color camera. The number of the wavelength ranges may be any number within a range from, for example, 4 to 100 or so. This number of the wavelength ranges will be referred to as "the number of bands". Depending on applications, the number of bands may exceed 100.

The data to be obtained is the data of the hyperspectral image 20, and this data is denoted as f. When the number of wavelength bands is M, f is the data obtained by integrating image data $f_1$, image data $f_2$, ..., and image data $f_M$ of the respective bands. The horizontal direction of the image is defined as the x-direction, and the vertical direction of the image is defined as the y-direction. When the number of pixels in the x-direction of the image data to be obtained is m, and the number of pixels in the y-direction thereof is n, each of the image data $f_1$, the image data $f_2$, ..., and the image data $f_M$ is two-dimensional data of $n \times m$ pixels. Therefore, the data f is three-dimensional data having an element count of $n \times m \times M$. This three-dimensional data will be referred to as "hyperspectral image data" or a "hyperspectral data cube". In contrast, data g of the compressed image 10 acquired by the filter array 110 through encoding and multiplexing has an element count of $n \times m$. The data g can be expressed by the following expression (1).

[Expression 2]

$$ g = Hf = H \begin{bmatrix} f_1 \\ f_2 \\ \vdots \\ f_W \end{bmatrix} \qquad ( 1 ) $$

In this expression, each of $f_1$, $f_2$, ..., and $f_N$ is data having $n \times m$ elements. Therefore, the vector on the right side is a one-dimensional vector having $n \times m \times M$ rows and one column. The vector g is expressed and calculated with transformation to a one-dimensional vector having $n \times m$ rows and one column. The matrix H represents a transformation in which individual components $f_1$, $f_2$, ..., and $f_M$ of the vector f are encoded and intensity-modulated using encoding information that differs on a wavelength-band-by-wavelength-band basis (hereinafter referred to also as "mask information"), and are then added together. Therefore, H is a matrix having $n \times m$ rows and $n \times m \times M$ columns.

Once the vector g and the matrix H are given, it seems that f can be calculated by solving an inverse problem of the expression (1). However, since the number of elements ($n \times m \times M$) in the data f to be obtained is greater than the number of elements ($n \times m$) in the acquired data g, this problem is an ill-posed problem, and thus it cannot be solved as is. Thus, the image processing apparatus 200 takes advantage of the redundancy of the images included in the data f, and uses a compressed sensing method to find the solution. Specifically, the data f to be obtained is estimated by solving the following expression (2).
[Expression 3]

$$f' = \arg \min_{f} \{ \|g - Hf\|_{l_2} + \tau\Phi(f) \} \qquad (2)$$

In this expression, f denotes the estimated data of f. The first term in the braces of the expression above represents a shift amount between an estimation result Hf and the acquired data g, which is a so-called residual term. Though the sum of squares is treated as the residual term here, an absolute value, a root-sum-square value, or the like may be treated as the residual term. The second term in the braces is a regularization term or a stabilization term. The expression (2) means to obtain f that minimizes the sum of the first term and the second term. The function in the braces in the expression (2) is called an evaluation function. The image processing apparatus 200 is capable of calculating, as the final solution f, f that minimizes the evaluation function while causing the solution to converge through recursive iterative arithmetic operations.

The first term in the braces of the expression (2) means an arithmetic operation for obtaining the sum of squares of the difference between the acquired data g and Hf, which is obtained by transforming f in the estimation process using the matrix H. In the second term, $\Phi(f)$ is a constraint in regularization of f, and is a function that reflects sparse information of the estimated data. This function has an effect of making the estimated data smooth or stable. The regularization term can be expressed using, for example, discrete cosine transform (DCT), wavelet transform, Fourier transform, total variation (TV), or the like of f. For example, in a case where total variation is used, stable estimated data can be acquired, with the influence of noise of the observation data g suppressed. The sparsity of the target 70 in the space of each regularization term differs depending on the texture of the target 70. A regularization term that makes the texture of the target 70 sparser in the space of the regularization term may be selected. Alternatively, regularization terms may be included in arithmetic operation. $\tau$ is a weighting coefficient. The greater the weighting coefficient $\tau$, the greater the amount of reduction of redundant data, resulting in an increase in a compression rate. The less the weighting coefficient $\tau$, the lower the convergence to the solution. The weighting coefficient $\tau$ is set to a moderate value with which f is converged to some extent, without excessive compression.

Note that, in the configurations illustrated in Figs. 1B and 1C, an image encoded by the filter array 110 is acquired in a blurred state on the imaging surface of the image sensor 160. Therefore, the hyperspectral image 20 can be reconstructed by storing the blur information in advance and by reflecting the blur information into the matrix H described above. The blur information is expressed by a point spread function (PSF). PSF is a function that defines the degree of spreading of a point image to the surrounding pixels. For example, in a case where a point image corresponding to one pixel on an image is spread to a region of k $\times$ k pixels around the pixel due to a blur, PSF can be defined as a group of coefficients, that is, a matrix, indicating the influence on the pixel value of each pixel in the region. By reflecting the influence of the blur in the encoding pattern by PSF into the matrix H, it is possible to reconstruct the hyperspectral image 20. The filter array 110 may be disposed at any position; however, a position where the encoding pattern of the filter array 110 does not disappear due to excessive spreading may be selected.

Through the processing described above, it is possible to reconstruct the hyperspectral image 20 from the compressed image 10 acquired by means of the filter array 110 and the image sensor 160. Details on the method for reconstructing the hyperspectral image 20 are disclosed in PTL 1. The entire content of disclosure in PTL 1 is incorporated into this specification by reference.

[2. First Example of Light Detection Apparatus 100 Capable of Reducing Influence of Noise]

Actually, it could happen that noise is superimposed on the compressed image 10 when the target 70 is shot. A first example of the light detection apparatus 100 capable of reducing the influence of noise will be described below.

[2.1. Influence of Noise on Hyperspectral Image 20]

First, with reference to Fig. 5, the influence of noise on the hyperspectral image 20 will now be described. Fig. 5 is a diagram illustrating, for each of a case where the noise is 0% and a case where the noise is 2%, the compressed image 10 and an error map of the hyperspectral image 20. The target 70 is a butterfly. The compressed image 10 with noise of 0% superimposed thereon is illustrated at the upper left portion of Fig. 5, and the compressed image 10 with noise of 2% superimposed thereon is illustrated at the lower left portion of Fig. 5. An error map of the hyperspectral image 20 reconstructed from the compressed image 10 with noise of 0% superimposed thereon is illustrated at the upper right portion of Fig. 5, and an error map of the hyperspectral image 20 reconstructed from the compressed image 10 with noise of 2% superimposed thereon is illustrated at the lower right portion of Fig. 5. The error map corresponds to the spatial distribution of a value obtained by averaging reconstruction errors between a reconstructed image and a ground truth image regarding the wavelength bands included in the target wavelength range. In the error map illustrated in Fig. 5, the closer to white, the greater the error; that is, the closer to black, the less the error.

The meaning of the compressed image with noise of a% superimposed thereon is that each of luminance values included in a compressed image 120 is multiplied by a numerical value selected randomly from a range that is greater than or equal to (100-a)/100 and less than or equal to (100+a)/100. In the example illustrated in Fig. 5, as the reconstruction error at a certain pixel included in the error map, a mean square error (MSE) between the luminance value of said certain pixel included in the reconstructed image and the luminance value of said certain pixel included in the ground truth image is used. MSE is calculated using the following expression (3).

[Expression 4]

$$\mathrm{MSE} = \frac{1}{\mathrm{m} \cdot \mathrm{n}} \sum_{\mathrm{i}=1}^{\mathrm{m}} \sum_{\mathrm{j}=1}^{\mathrm{n}} \left( \mathrm{I}'_{\mathrm{i,j}} - \mathrm{I}_{\mathrm{i,j}} \right)^2 \qquad (3)$$

where m and n denote the number of pixels in the horizontal direction and the number of pixels in the vertical direction respectively; $I_{i,j}$ denotes the luminance value of the pixel at the position (i, j) in the ground truth image; and $I'_{i,j}$ denotes the luminance value of the pixel at the position (i, j) in the reconstructed image.

As illustrated at the upper right portion of Fig. 5, even in a case where the noise is 0%, a reconstruction error occurs in the process of reconstruction operation. As illustrated at the lower right portion of Fig. 5, in a case where the noise is 2%, on the whole, the reconstruction error increases in comparison with a case where the noise is 0%. As described here, noise increases the reconstruction error of the reconstructed image.

Even when noise is superimposed on the compressed image 10, the light detection apparatus 100 according to the present embodiment makes it possible to reduce an increase in a reconstruction error due to the noise.

[2.2. Increase in Reconstruction Error Due to Noise]

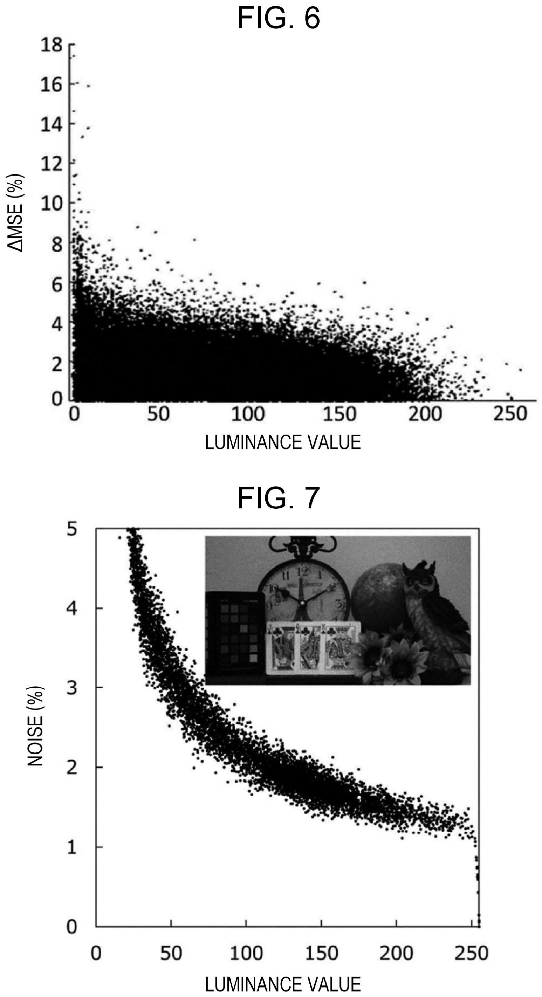

Next, with reference to Fig. 6, how much the reconstruction error will increase due to the noise will be described. Fig. 6 is a graph that shows a relationship between the luminance value of each pixel included in the compressed image 10 and an amount of increase in a reconstruction error at the corresponding pixel included in the hyperspectral image 20 in the case where the noise is 2%. The reconstruction error at a certain pixel included in the hyperspectral image 20 means an average value of the reconstruction errors at said certain pixel included in the reconstructed image regarding the wavelength bands included in the target wavelength range. The compressed image 10 is the compressed image illustrated at the lower left portion of Fig. 5. The compressed image 10 includes 512 × 512 pixels arranged two-dimensionally. The luminance value is expressed in terms of an 8-bit scale of tones. The minimum value of the luminance value is zero, and the maximum value thereof is 255. The amount of increase in the reconstruction error at each pixel, $\Delta$MSE, corresponds to a value obtained by subtracting a reconstruction error $MSE_0$ from a reconstruction error MSE'. The reconstruction error MSE' is a reconstruction error at each pixel included in the hyperspectral image 20 reconstructed from the compressed image 10 on which noise is superimposed. The reconstruction error $MSE_0$ is a reconstruction error at the corresponding pixel included in the hyperspectral image 20 reconstructed from the compressed image 10 on which noise is not superimposed. In the example illustrated in Fig. 6, the reconstruction error MSE' is obtained from the error map illustrated at the lower right portion of Fig. 5, and the reconstruction error $MSE_0$ is obtained from the error map illustrated at the upper right portion of Fig. 5. As can be seen from Fig. 6, $\Delta$MSE increases as the luminance value decreases. This means that the influence of the noise on the hyperspectral image 20 increases as the luminance value decreases.

In the example illustrated in Fig. 6, noise that is not dependent on the amount of light has been dealt with. The noise superimposed on the compressed image 10 actually includes not only readout noise, which is not dependent on the amount of light, but also, for example, photon shot noise, which is proportional to the square root of the amount of light, and fixed pattern noise, which is proportional to the amount of light. Therefore, noise is dependent on the amount of light. The luminance value reflects the amount of light.

Fig. 7 is a graph that shows a measurement result of a relationship between luminance values in the compressed image 10 and noise. The target 70 includes, as illustrated in the inset diagram of Fig. 7, a clock, a globe, a color chart, playing cards, artificial flowers, and a bird ornament. The compressed image 10 including 1280 × 720 pixels was acquired over one hundred frames. One frame is 1/50 sec. The horizontal axis and the vertical axis of the graph illustrated in Fig. 7 represent the average value and standard deviation of the luminance values of the respective pixels included in the compressed image regarding all of the frames respectively. The temporal fluctuations of the luminance values correspond to the noise. This noise is noise caused by the image sensor 160. Therefore, the presence or absence of the filter array 110 is not important.

As illustrated in FIG. 7, when the amount of light is taken into consideration of noise, the less the luminance value, the greater the noise. As illustrated in FIG. 6, even when the noise is constant, $\Delta$MSE increases as the luminance value decreases. One can see from the combination of the result illustrated in Fig. 6 and the result illustrated in Fig. 7 that $\Delta$MSE further increases as the luminance value decreases.

[2.3. Conditions for Reducing Increase in Reconstruction Error Due to Noise]

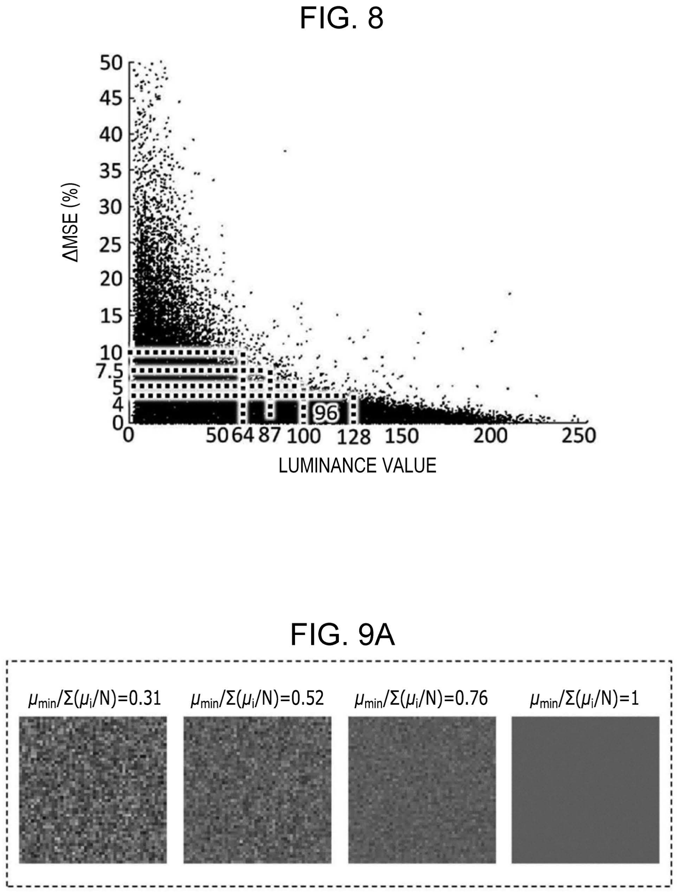

Next, with reference to Fig. 8, conditions for reducing the increase in the reconstruction error due to the noise will be described. Fig. 8 is a graph that shows a relationship between the luminance value of each pixel included in the compressed image 10 and an amount of increase in a reconstruction error at the corresponding pixel included in the hyperspectral image 20 in a case where noise measured actually is superimposed on the compressed image 10. The target 70 is a white board. In a case where the target wavelength range is the visible region, a white board reflects light within the target wavelength range at approximately the same reflectance, irrespective of the wavelength band. If the wavelength dependency of the reflectance is low, the target 70 need not be a white board. The compressed image 10 was acquired under a condition of an average luminance value of 128. The condition that is least susceptible to overexposure and underexposure and offers a wide dynamic range can be selected for general purposes. In the description below regarding Fig. 8, regardless of what values the minimum luminance and the maximum luminance may take, the compressed image 10 is acquired such that the average luminance value is the median (128 in the case of an 8-bit scale) of the luminance range that the image sensor can offer.

As illustrated in FIG. 8, $\Delta$MSE rises steeply as the luminance value decreases. It is a case where the luminance value is greater than or equal to 64 when $\Delta$MSE is less than or equal to 10%. Therefore, it is possible to make $\Delta$MSE less than or equal to 10% by designing the filter array 110 and the image sensor 160 such that the luminance value of each pixel is greater than or equal to 64. The luminance value of 64 corresponds to 50% of the average luminance value mentioned above.

It is a case where the luminance value is greater than or equal to 87 when $\Delta$MSE is less than or equal to 7.5%. Therefore, it is possible to make $\Delta$MSE less than or equal to 7.5% by designing the filter array 110 and the image sensor 160 such that the luminance value of each pixel is greater than or equal to 87. The luminance value of 87 corresponds to 68% of the average luminance value mentioned above.

It is a case where the luminance value is greater than or equal to 96 when $\Delta$MSE is less than or equal to 5%. Therefore, it is possible to make $\Delta$MSE less than or equal to 5% by designing the filter array 110 and the image sensor 160 such that the luminance value of each pixel is greater than or equal to 96. The luminance value of 96 corresponds to 75% of the average luminance value mentioned above.

In a case where the luminance value is 128, $\Delta$MSE is approximately 4%.

The light detection apparatus 100 according to the present embodiment can be said to include pixels the number of which is N. Each of the N pixels includes a filter and a light detection element that detects light having passed through the filter. On a signal outputted from the light detection element, information on four or more wavelength bands included in a target wavelength range is superimposed.

Let $\mu_i$ be an average of values of an effective sensitivity of an i-th pixel (i = 1, 2, ..., N) among the N pixels in the target wavelength range. $\mu_i$ is obtained on a basis of $T_i(\lambda_k)$, which denotes a wavelength dependency of a transmittance of the filter included in the i-th pixel, and $I(\lambda_k)$, which denotes a wavelength dependency of a detection sensitivity of the light detection element included in the i-th pixel (k = 1, 2, ..., M). $\mu_i$ is expressed by the following expression (4).

[Expression 5]

$$\mu_i = \frac{1}{M}\sum_{k=1}^{M} T_i(\lambda_k)I(\lambda_k) \qquad (4)$$

The light detection elements included in the image sensor 160 have approximately the same detection sensitivity for light having wavelengths corresponding to a wavelength band $W_k$. That is, each of the detection sensitivity $I_1(\lambda_k)$ of the light detection element included in the first pixel for light having the wavelengths corresponding to the wavelength band $W_k$ to the detection sensitivity $I_N(\lambda_k)$ of the light detection element included in the N-th pixel for light having the wavelengths corresponding to the wavelength band $W_k$ is approximately equal to the detection sensitivity $I(\lambda_k)$. $I_1(\lambda_k) = ... = I_N(\lambda_k) = I(\lambda_k)$ may hold true. $T_i(\lambda_k)I(\lambda_k)$ denotes the wavelength dependency of the effective sensitivity of the i-th pixel. The wavelength dependency of the effective sensitivity of the i-th pixel may be $T_i(\lambda_k)I_i(\lambda_k)$.

$\mu_i$ corresponds to the luminance value of the i-th pixel included in the compressed image 10 in a case where the target 70 is a white board. Therefore, from the above discussion presented while referring to Fig. 8, when the minimum value among $\mu_1$ to $\mu_N$ is defined as $\mu_{min}$, it is possible to make $\Delta$MSE less than or equal to 10% in a case where the N pixels included in the light detection apparatus 100 satisfy the following expression (5). In the expression (5), 0.5 on the right side corresponds to a value obtained by dividing 64, which is the least luminance value, by 128, which is the average luminance value.

[Expression 6]

$$\frac{\mu_{min}}{\left(\sum_{i=1}^{N} \mu_i / N\right)} \geq 0.5 \qquad (5)$$

Similarly, it is possible to make $\Delta$MSE less than or equal to 7.5% in a case where the N pixels included in the light detection apparatus 100 satisfy the following expression (6). In the expression (6), 0.68 on the right side corresponds to a value obtained by dividing 87, which is the least luminance value, by 128, which is the average luminance value.

[Expression 7]

$$\frac{\mu_{min}}{\left(\sum_{i=1}^{N} \mu_i / N\right)} \geq 0.68 \qquad (6)$$

It is possible to make $\Delta$MSE less than or equal to 5% in a case where the N pixels included in the light detection apparatus 100 satisfy the following expression (7). In the expression (7), 0.75 on the right side corresponds to a value obtained by dividing 96, which is the least luminance value, by 128, which is the average luminance value.

[Expression 8]

$$\frac{\mu_{min}}{\left(\sum_{i=1}^{N} \mu_i / N\right)} \geq 0.75 \qquad (7)$$

Fig. 9A is a diagram illustrating an example of the compressed image 10 regarding different $\mu_{min}/(\Sigma_i \mu_i / N)$ in a case where the target 70 is a white board. The light detection apparatus 100 configured to acquire the compressed image 10 by shooting the white board includes pixels the number of which is N, with different $\mu_{min}/(\Sigma_i \mu_i / N)$. The mask information of the filter array 110 was generated on a simulation such that $\mu_{min}/(\Sigma_i \mu_i / N) = 0.31, 0.52, 0.76$, and 1 holds true. In this simulation, the mask information was designed such that the distribution regarding the luminance values for the number of pixels is a normal distribution, with the average luminance value of 128. The color shown in Fig. 9A means that the closer it is to white, the brighter it is, and the closer it is to black, the darker it is. As illustrated in Fig. 9A, the less $\mu_{min}/(\Sigma_i \mu_i / N)$ is, the greater the dispersion of the luminance values is, and the closer $\mu_{min}/(\Sigma_i \mu_i / N)$ is to 1, the less the dispersion of the luminance values is.

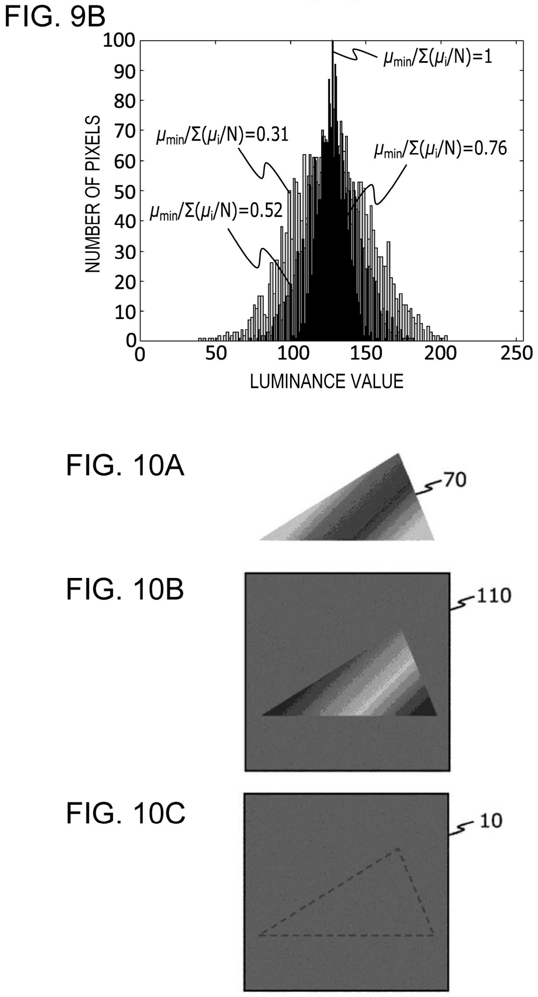

Fig. 9B is a graph that shows an example of histograms obtained from the luminance values of the compressed image 10 regarding different $\mu_{min}/(\Sigma_i \mu_i / N)$. The distribution having a light-gray spread, the distribution having a dark-gray spread, and the distribution having a black spread in Fig. 9B represent distributions for cases where $\mu_{min}/(\Sigma_i \mu_i / N) = 0.31$, 0.52, and 0.76 respectively. The black vertical line at the center in Fig. 9B represents a distribution for a case where $\mu_{min}/(\Sigma_i \mu_i / N) = 1$.

In a case where $\mu_{min}/(\Sigma_i \mu_i / N) = 0.31$, $\mu_{min} = 40$, and $(\Sigma_i \mu_i / N) = 128$. In this case, since $\mu_{min} < 64$, $\Delta$MSE is in excess of 10%.

By contrast, in a case where $\mu_{min}/(\Sigma_i \mu_i / N) = 0.52$, $\mu_{min} = 67$, and $(\Sigma_i \mu_i / N) = 128$. In this case, since $\mu_{min} \geq 64$, it is possible to make $\Delta$MSE less than or equal to 10%.

In a case where $\mu_{min}/(\Sigma_i \mu_i / N) = 0.76$, $\mu_{min} = 97$, and $(\Sigma_i \mu_i / N) = 128$. In this case, since $\mu_{min} \geq 96$, it is possible to make $\Delta$MSE less than or equal to 5%.

In a case where $\mu_{min}/(\Sigma_i \mu_i / N) = 1$, $\mu_{min} = 128$, and $(\Sigma_i \mu_i / N) = 128$. In this case, it is possible to make $\Delta$MSE approximately equal to 4%.

As can be seen from the above, it is possible to reduce an increase in a reconstruction error due to noise effectively in a case where the N pixels included in the light detection apparatus 100 satisfy the expression (5). Satisfying the expression (6) is more effective than satisfying the expression (5). Satisfying the expression (7) is even more effective. In the above example, a case where $(\Sigma_i \mu_i / N)$, which is the average value of the effective sensitivity, corresponds to 128 is assumed; however, this is just an example. The luminance value corresponding to $(\Sigma_i \mu_i / N)$ may be different from it. The luminance value corresponding to $(\Sigma_i \mu_i / N)$ varies depending on shooting conditions such as the brightness of a light source, optical exposure time, gain, and the like. In the expressions (5) to (7), values obtained by dividing $\mu_{min}$ by $(\Sigma_i \mu_i / N)$

are used for the purpose of indicating camera design indices. However, the disclosure can be applied also to cases where the luminance value corresponding to $(\Sigma_i \mu_i/N)$ is different from 128.

As described while referring to Figs. 9A and 9B, whether the N pixels included in the light detection apparatus 100 satisfy the expression (5) to 7 or not can be determined by acquiring the compressed image 10 through the shooting of a white board and then by checking luminance values obtained respectively from pixels included in the compressed image 10. This is because, as described earlier, $\mu_i$ corresponds to the luminance value of the i-th pixel included in the compressed image 10 in a case where the target 70 is a white board. The acquisition of the compressed image 10 is performed in an environment that is not excessively dark so that $\mu_{min}/(\Sigma_i \mu_i/N)$ can be calculated. In the acquisition of the compressed image 10, an object that does not cause an extreme light-and-dark difference and whose intensity of reflected light is not much dependent on space nor on wavelength may be used in place of a white board.

When the spectral transmittance $T(\lambda)$ of the filter and the wavelength dependency $I(\lambda)$ of the detection sensitivity of the light detection element are known, $\mu_i$ may be calculated on the basis of $T(\lambda)$ and $I(\lambda)$. If the filter array 110 is detachable from the image sensor 160, $T(\lambda)$ and $I(\lambda)$ can be acquired separately. Even in a case where it is not easy to detach the filter array 110 from the image sensor 160, it is possible to acquire $T(\lambda)$ and $I(\lambda)$ from an image sensor of the same model number as that of the image sensor 160. Therefore, it is possible to estimate $T(\lambda)$ on the basis of $T(\lambda) \times I(\lambda)$, which is obtained from the result of detecting light of each of the wavelength bands included in the target wavelength range by using the filter array 110 and the image sensor 160, and on the basis of $I(\lambda)$ that is known.

The average value of the transmittance of the optical filter included in the i-th pixel in the target wavelength range, instead of the average value of the effective sensitivity of the i-th pixel in the target wavelength range, may be taken as $\mu_i$ described above. In this case, $I(\lambda)$ is replaced by 1 in the expression (4). It is possible to reduce an increase in a reconstruction error due to noise effectively in a case where the filter array 110 includes filters the number of which is N and where the N filters satisfy the expression (5). Satisfying the expression (6) is more effective than satisfying the expression (5). Satisfying the expression (7) is even more effective.

The N pixels included in the light detection apparatus 100 according to the present embodiment may be configured not to include filters arranged at the periphery of the filter array 110 and light detection elements arranged at the periphery of the image sensor 160. This is because the target 70 shot is often captured in the neighborhood of the center of the compressed image 10 and thus because the filters arranged at the periphery of the filter array 110 and the light detection elements arranged at the periphery of the image sensor 160 are not so important for the acquisition of the compressed image 10, for example. The periphery of the filter array 110 is an area where there is no overlap when the entire area of the filter array 110 and a scaled-down area with a reduction in size from the entire area are put one on the other. The scaled-down area is, for example, an area with a reduction in size to 90% from the entire area of the filter array 110. The scaled-down area may be an area with a reduction in size to 50% from the entire area of the filter array 110, or an area with a reduction in size to 70%. The same holds true for the periphery of the image sensor 160.

[2.4. Filter Array 110 That is Versatile for Target 70]

Next, the filter array 110 that is versatile for the target 70 will be described. Figs. 10A to 10C are diagrams schematically illustrating examples of the target 70, the filter array 110, and the compressed image 10 respectively. The color shown in Fig. 10A means that the closer it is to white, the brighter it is, and the closer it is to black, the darker it is. The color shown in Fig. 10B means that the closer it is to white, the higher the transmittance is, and the closer it is to black, the lower the transmittance is.

As illustrated in Fig. 10A, the target 70 having a triangular shape includes both a bright portion and a dark portion. The filter array 110 illustrated in Fig. 10B has a low transmittance at its portion where the bright portion of the target 70 forms an image, and has a high transmittance at its portion where the dark portion of the target 70 forms an image. The compressed image 10 illustrated in Fig. 10C is acquired by shooting the target 70 illustrated in Fig. 10A through the filter array 110 illustrated in Fig. 10B. Since the luminance values obtained respectively from the pixels included in the compressed image 10 illustrated in Fig. 10C are uniform, $\mu_{min} = (\Sigma_i \mu_i/N)$ in the expressions (5) to (7). That is, the left side of the expressions (5) to (7) is 1, and it is thus possible to reduce an increase in a reconstruction error due to noise effectively.

However, the filter array 110 illustrated in Fig. 10B, though effective for the target 70 illustrated in Fig. 10A, is not necessarily effective for other targets and is thus poor in general-purpose versatility. By contrast, the filter array 110 to be described below is versatile for various targets 70.

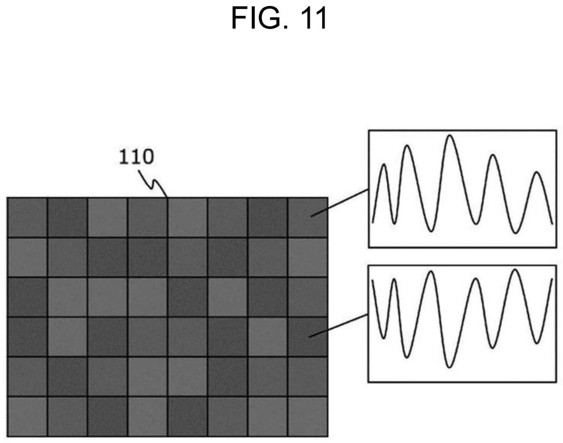

Fig. 11 is a diagram schematically illustrating an example of the filter array 110 that is versatile. The filters included in the filter array 110 include more than one kind of filters having different wavelength dependencies of transmittance from one another, that is, different transmission spectra from one another. Said more than one kind of filters are arranged irregularly. The color differences shown in Fig. 11 represent the kinds of the filters. The curves enclosed by rectangles illustrated in Fig. 11 show an example of the transmission spectra of two kinds of filters, among said more than one kind of filters. In the example illustrated in Fig. 11, the filters are arranged in six rows and eight columns; however, there is no limit in the number of the filters. In the example illustrated in Fig. 11, there are three kinds of filters; however, as described earlier, the number of the kinds of filters may be four or more.

The transmission spectrum of a filter exhibits peaks in the target wavelength range. When a peak having the greatest high-to-low difference among the peaks is taken as a reference, the height of the rest of the peaks is 0.5 times or more as great as the height of the peak taken as the reference. Each peak has a local maximum value, and there exist local minimum values on both sides respectively, with respect to said each peak. The height of each peak means the difference between the local maximum value and, of the local minimum values, the greater one. For each peak, the transmittance varies smoothly from the local maximum value to the local minimum value. However, minute noise that could exist between the local maximum value and the local minimum value is not taken into consideration. In a case where the filter has a resonant structure, the peaks arise from the resonant structure.

In a case where all of the filters overlapping with the image sensor 160 in a plan view have an equal average value of transmittance in the target wavelength range, the filter array 110 is versatile for various targets 70. In this case, even if the target 70 includes both a bright portion and a dark portion, the dispersion of the luminance values obtained respectively from the pixels included in the compressed image 10 is reduced. Therefore, it is possible to reduce the possibility of extremely low luminance of some pixels.

Note that there is no need for the average value of transmittance in the target wavelength range to be exactly equal. As long as a relative error obtained by dividing the absolute value of the difference between the maximum value and the minimum value, regarding the average value of transmittance in the target wavelength range, by the average value of the maximum value and the minimum value is within 5% inclusive, it is deemed as "equal".

The filter array 110 and the image sensor 160 can be designed as follows, for example. The pitch of the filters included in the filter array 110 agrees with the pitch of the light detection element included in the image sensor 160. Moreover, in a plan view, the entirety of each filter almost overlaps with the entirety of the corresponding one of the light detection elements.

By contrast, in some cases the pitch of the filters included in the filter array 110 does not agree with the pitch of the light detection element included in the image sensor 160. Alternatively, even if the pitch of the filters included in the filter array 110 agrees with the pitch of the light detection element included in the image sensor 160, in some cases a misregistration occurs between the filter array 110 and the image sensor 160 in a plan view. In these cases, two or more filters overlap with a certain light detector partially in a plan view.

Light that forms an image on a certain light detection element included in the image sensor 160 is reflective of two or more transmission spectra that two or more filters overlapping with said certain light detection element partially have respectively. Therefore, in the above cases, the portion, of the two or more filters, overlapping with the light detection element may be deemed as a virtual one filter. The transmission spectrum of the virtual one filter can be calculated on the basis of the two or more transmission spectra mentioned above. For example, two or more weights corresponding respectively to the two or more filters are calculated by dividing the area size of the portion where each of the two or more filters overlaps with the light detection element by the area size of the entirety of the light detection element. The transmission spectrum of the virtual one filter can be calculated by multiplying the two or more transmission spectra by the two or more weights respectively and then by adding the multiplication results together.

[2.5. Method of Manufacturing Filter Array 110]

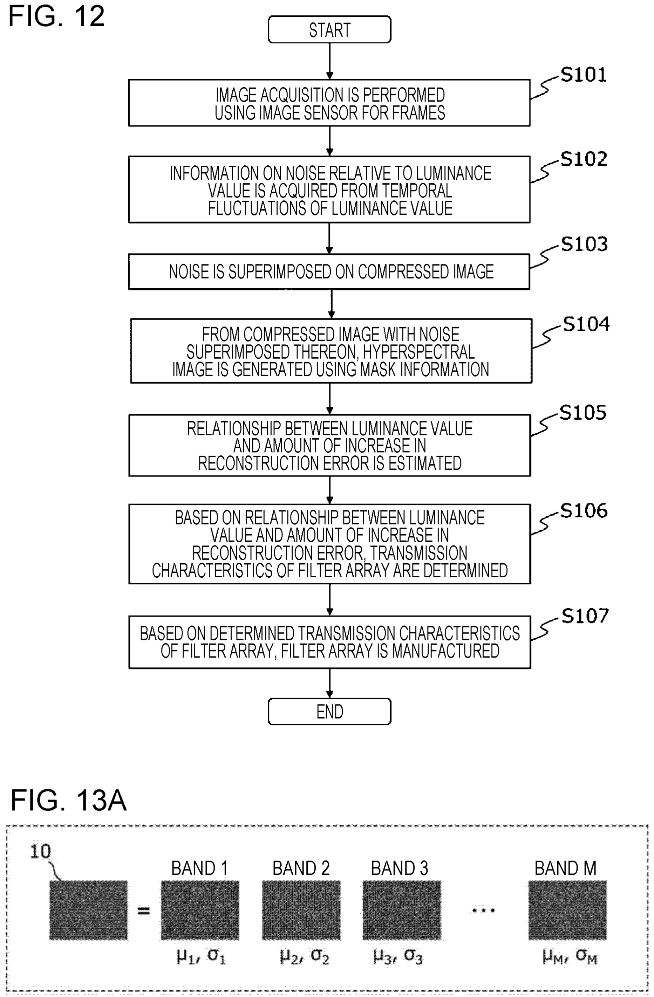

Next, with reference to Fig. 12, a method of manufacturing the filter array 110 will now be described. Fig. 12 is a flowchart schematically illustrating an example of a method of manufacturing the filter array 110. The method of manufacturing the filter array 110 includes processes in steps S101 to S107 illustrated in Fig. 12. The method of manufacturing the filter array 110 may be implemented by, for example, machines on a manufacturing line at a factory. Alternatively, the method of manufacturing the filter array 110 may be implemented by humans.

In a storage device prepared separately, the compressed image 10 before noise superimposition, mask information, and the hyperspectral image 20 generated using the mask information from the compressed image 10 before noise superimposition are stored. The method of manufacturing the filter array 110 is implemented using the storage device mentioned above, the image sensor 160 illustrated in Figs. 1A to 1D, and the image processing apparatus 200 illustrated therein.

Each step will be described below.

<Step S101>

Image acquisition is performed using the image sensor 160 for frames. The number of the frames may be, for example, 1000.

<Step S102>

From the images corresponding respectively to the frames for which the acquisition has been performed in step S101, as illustrated in Fig. 7, information on noise relative to the luminance values is acquired.

<Step S103>

The noise having been acquired in step S102 is superimposed on the above-mentioned compressed image 10 stored in the storage device.

<Step S104>

From the compressed image 10 with the noise superimposed thereon, the hyperspectral image 20 is generated by the image processing apparatus 220 by using the above-mentioned mask information stored in the storage device.

<Step S105>

A relationship between the luminance values and an amount of increase in the reconstruction error is estimated on the basis of the hyperspectral image 20 having been generated in step S104 and the above-mentioned hyperspectral image 20 stored in the storage device as illustrated in Fig. 8.

<Step S106>

On the basis of above-mentioned relationship having been estimated in step S106, as illustrated in Fig. 8, the minimum value that should be met by the average value of transmittance in the target wavelength range at the filters the number of which is N in the filter array 110 is determined such that the amount of increase in the reconstruction error is less than or equal to a predetermined value. The predetermined value may be, for example, 10%, 7.5%, or 5%. In this way, the transmission characteristics of the filter array 110 are determined.

<Step S107>

The filter array 110 is manufactured on the basis of the transmission characteristics having been determined in step S106.
It is possible to manufacture the filter array 110 through the processes described above. With the filter array 110 manufactured in this way, it is possible to reduce the increase in the reconstruction error due to noise.

[3. Second Example of Light Detection Apparatus 100 Capable of Reducing Influence of Noise]

A second example of the light detection apparatus 100 capable of reducing the influence of noise will be described below, with the noise limited to random noise. The light detection apparatus 100 includes the aforementioned pixels the number of which is N.

[3.1. Feature Amount of Compressed Image 10]

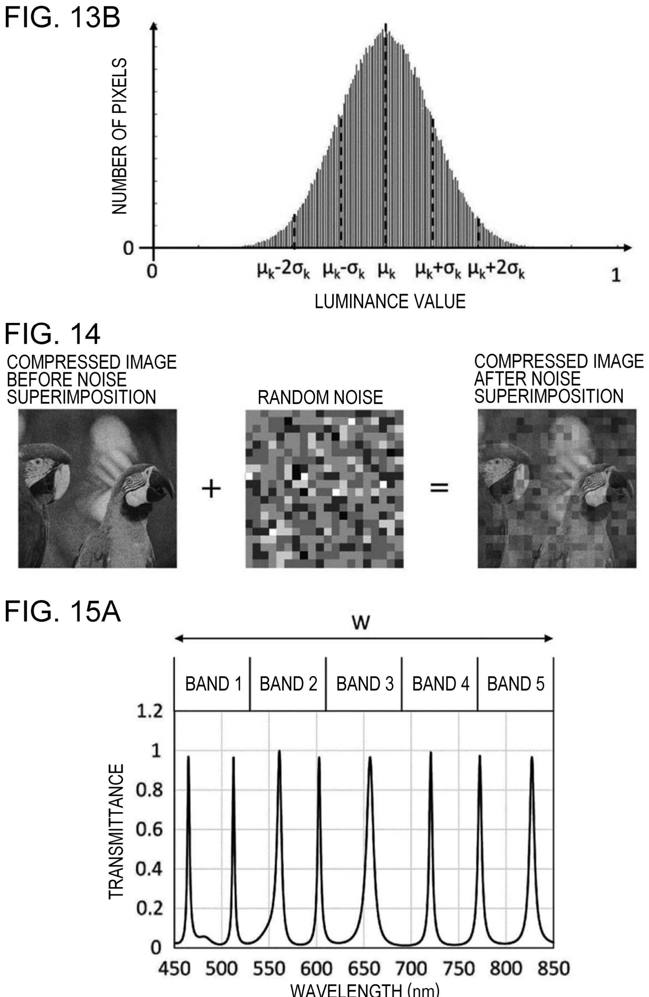

In this section, with reference to Figs. 13A and 13B, a feature amount of the light detection apparatus 100 according to the present embodiment, which is to be used for discussion of random noise, will be described. Fig. 13A is a diagram schematically illustrating a spatial pattern of the luminance values of the compressed image 10 regarding light in each of the wavelength bands. The spatial pattern is expressed as a mosaic pattern. As illustrated in Fig. 13A, the distribution of the luminance values of the compressed image 10 differs from one wavelength band to another. Fig. 13B is a diagram schematically illustrating an example of a histogram obtained from the luminance values of the compressed image 10 regarding light in the k-th wavelength band (where K is an integer that is greater than or equal to one and is less than or equal to M) among four or more wavelength bands included in the target wavelength range. The light in the k-th wavelength band means light that has wavelengths included in the k-th wavelength band. In the example illustrated in Fig. 13B, the horizontal axis represents each luminance value, and the vertical axis represents the number of pixels that have said luminance value. From the histogram illustrated in Fig. 13B, an average value $\mu_k$ of the luminance values of the compressed image 10 regarding the light in the k-th wavelength band and a finite standard deviation $\sigma_k$ thereof can be obtained as the feature amount. In a case where the light in the k-th wavelength band is incident on each of the N pixels, $\mu_k$ denotes the average of N signal intensity values obtained based on the intensity of the signal outputted from the light detection element included in each of the N pixels, and $\sigma_k$ denotes the standard deviation of the N signal intensity values.

In a case where the histogram illustrated in Fig. 13B has a Gaussian distribution, the number of filters whose luminance values fall within a range from $\mu_k - \sigma_k$ inclusive to $\mu_k + \sigma_k$ inclusive accounts for approximately 68% of the total. The number of filters whose transmittance falls within a range from $\mu_j - 2\sigma_k$ inclusive to $\mu k + 2\sigma_k$ inclusive accounts for approximately 95% of the total. As illustrated in Fig. 13B, the greater the value of $\mu_k - 2\sigma_k$ is, the greater the number of pixels that have high luminance is. The greater $\sigma_k$ is, the easier the segregation among the filters is.

The histogram described above can be obtained by performing measurement using the image sensor 160 configured to detect light intensity in a predetermined number of tones such as an 8-bit scale or a 16-bit scale. In an actual light detection apparatus 100, a histogram having a shape different from that of Fig. 13B could be obtained. Since the wavelength dependency of transmittance differs from filter to filter, the histogram shape differs from wavelength band to wavelength band. Therefore, the average value of the luminance values of the compressed image 10 regarding light in a certain wavelength band and a standard deviation thereof also differs depending on the wavelength band.

In the description below, the histogram of the luminance values is assumed to be in an 8-bit scale. Even when the luminance values are detected in any scale other than the 8-bit scale, it is possible to obtain the histogram of the luminance values by converting the luminance values into the 8-bit scale.

[3.2. Influence of Random Noise on Reconstructed Image]

Next, with reference to Figs. 14 to 15B, the influence of random noise on a reconstructed image will now be described. Fig. 14 is a diagram schematically illustrating an example of the compressed image 10 with random noise superimposed thereon. As illustrated in Fig. 14, a compressed image after noise superimposition could be less clear than a compressed image before noise superimposition.

Fig. 15A is a diagram illustrating an example of the transmission spectrum of a certain filter included in a filter array. In the example illustrated in Fig. 15A, the target wavelength range W is a range from 450 nm inclusive to 850 nm inclusive. The target wavelength range W includes five wavelength bands each of which has a bandwidth of 80 nm. In the example illustrated in Fig. 15A, the transmission spectrum includes eight sharp peaks. The maximum value of the transmittance is approximately 1, and the minimum value thereof is approximately 0.02. The transmittance is sufficiently low between two peaks that are adjacent to each other. A filter having such a transmission spectrum can be realized by a resonant structure that includes two reflection layers having high reflectance within the target wavelength range W and an interference layer between them. Changing the refractive index and/or thickness of the interference layer causes a shift of the transmission spectrum toward the long-wavelength side or the short-wavelength side. The filter array includes more than one kind of filters whose transmission spectra are shifted in such a manner. The filter array includes one million filters arranged two-dimensionally. The one million filters include sixteen kinds of filters arranged irregularly.

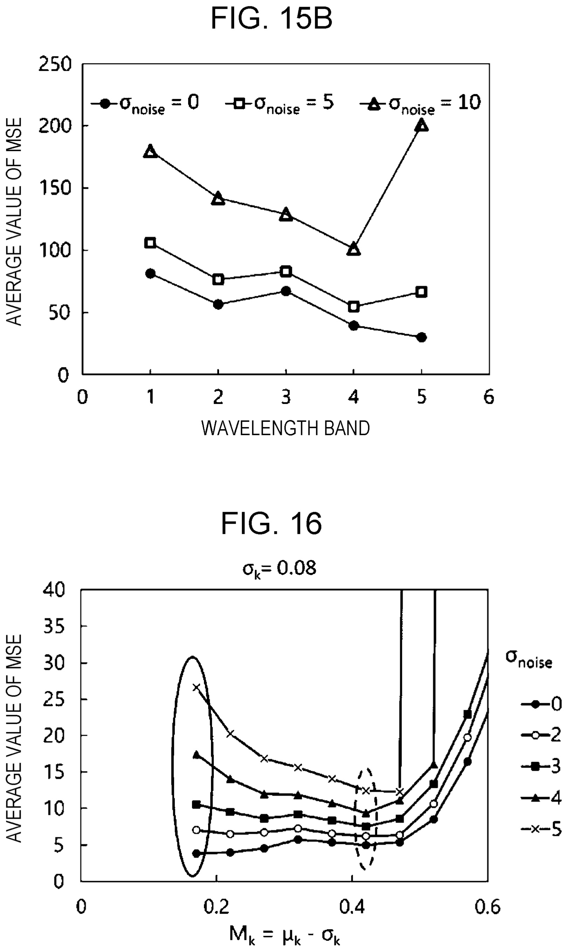

Fig. 15B is a diagram illustrating an average value of MSE between a ground truth image and a reconstructed image regarding five wavelength bands in a case where random noise is superimposed on a compressed image acquired using the filter array described above. The random noise is generated in accordance with a Gaussian distribution the center of which is $\mu_{noise} = 0$ and the standard deviation of which is $\sigma_{noise}$. The variance $N_{noise}$ of the random noise added to each pixel is calculated using the following expression (8).

[Expression 9]

$$N_{noise} = \frac{1}{\sqrt{2\pi\sigma_{noise}}} \exp\left(-\frac{(g_{noise} - \mu_{noise})^2}{2\sigma_{noise}^2}\right) \qquad (8)$$

In this expression, $g_{noise}$ denotes the value of noise superimposed at each pixel. Both a positive value and a negative value are possible. In the example illustrated in Fig. 15B, $\sigma_{noise} = 0$, 5, and 10, where $\sigma_{noise} = 0$ means that there exists no random noise. The random noise increases when $\sigma_{noise}$ increases.

As can be seen from Fig. 15B, as $\sigma_{noise}$ increases, so does the average value of MSE in all of the five wavelength bands. In a case where there exists no random noise, a filter that has a transmission spectrum having a great contrast ratio between the maximum value and the minimum value of transmittance, such as the one illustrated in Fig. 15A, is capable of improving an S/N ratio between the wavelength bands. That is, the difference in the spatial distribution of the transmittance between the wavelength bands illustrated in Fig. 13A is clear. On the other hand, a filter array that includes such a filter is susceptible to the influence of random noise. As a result, a decrease in the wavelength resolution of a hyperspectral camera could happen.

[3.3. Light Detection Apparatus 100 Capable of Reducing Influence of Random Noise]

A light detection apparatus 100 that has a great value of $\mu_k - 2\sigma_k$ illustrated in Fig. 13B has high noise resistance.

The reason is that such a light detection apparatus 100 has high luminance. A light detection apparatus 100 that has great $\sigma_k$ illustrated in Fig. 13B also has high noise resistance. The reason is that, in such a light detection apparatus 100, the variance of the luminance values among the pixels is large and the segregation among the pixels is easy, and, therefore, the reconstruction accuracy of the reconstructed image improves. In light of the above, the light detection apparatus 100 according to the present embodiment will be described while taking, as the index of noise resistance, $M_k = \mu_k - \sigma_k$, which is the sum of $\mu_k - 2\sigma_k$ and $\sigma_k$. For simpler description, it is assumed below that $M_k = \mu_k - \sigma_k$ is equal among all of the wavelength bands. In the light detection apparatus 100 according to the present embodiment, the filter array 110 includes more than one kind of filters arranged irregularly.

Fig. 16 is a diagram illustrating a relationship between an average value of MSE between a ground truth image and a reconstructed image regarding wavelength bands and $M_k = \mu_k - \sigma_k$ in a case where $\sigma_k = 0.08$ for each of the wavelength bands. In the example illustrated in Fig. 16, the standard deviation of random noise is $\sigma_{noise} = 0, 2, 3, 4$, and 5. The luminance values of the compressed image 10 are dependent on $M_k$. The luminance values of the compressed image 10 decrease as the value of Mk becomes less. The luminance values of the compressed image 10 increase as the value of Mk becomes greater. In a case where the transmittance of most of the filters included in the filter array 110 is low and the transmittance of a part of them is high, the histogram of the luminance values of the compressed image 10 could be asymmetrical. As a result, $M_k$ could be a negative value.

In a case of $\sigma_{noise} = 0$, no random noise is superimposed on the compressed image 10. In this case, MSE is suppressed to be low when $M_k \leq 0.45$. As illustrated in Fig. 15A, in a case where the contrast ratio of filter transmittance is high, an average amount of light transmitted through the filter array 110 is small and the luminance is low; therefore, the value of $M_k$ is small. The light detection apparatus 100 including such a filter array 110 improves the S/N ratio between the wavelength bands. As a result, it is possible to suppress the occurrence of a reconstruction error. By contrast, when $M_k > 0.45$, the average value of MSE increases as $M_k$ increases. In a case where the contrast ratio of filter transmittance is low, an average amount of light transmitted through the filter array 110 is large and the luminance is high; therefore, the value of $M_k$ is large. The light detection apparatus 100 including such a filter array 110 decreases the S/N ratio between the wavelength bands. As a result, the reconstruction error increases.

In a case where $\sigma_{noise} > 0$, the average value of MSE increases greatly as $\sigma_{noise}$ increases when $M_k < 0.2$, as indicated by an area surrounded by a solid-line ellipse. By contrast, when $M_k$ is in the neighborhood of 0.42, though the average value of MSE increases as $\sigma_{noise}$ increases, the increase is suppressed, as indicated by an area surrounded by a broken-line ellipse. When Mk > 0.45, the average value of MSE increases as $M_k$ increases even if $\sigma_{noise}$ is small. As illustrated in Fig. 16, in a case where $\sigma_{noise} = 5$, it could happen that the average value of MSE skyrockets suddenly in a discontinuous manner. The above characteristics can be summarized as follows.

· (In a case where $M_k$ is small:) The S/N ratio between the wavelength bands is high. Therefore, when $\sigma_{noise}$ is small, the reconstruction accuracy of the reconstructed image is high. When $\sigma_{noise}$ increases, the amount of random noise becomes not negligible, as compared with a small amount of light transmitted through the filter array 110. As a result, the reconstruction error increases, and the reconstruction accuracy of the reconstructed image thus decreases greatly.

· (In a case where $M_k$ is excessively large:) The S/N ratio between the wavelength bands is low. Therefore, even if $\sigma_{noise}$ is small, the reconstruction accuracy of the reconstructed image is low.

· (In a case where $M_k$ is moderately large:) When $\sigma_{noise}$ is small, the reconstruction accuracy of the reconstructed image is high. Even if $\sigma_{noise}$ increases, the amount of random noise does not increase so much, as compared with the amount of light transmitted through the filter array 110. As a result, the increase in the reconstruction error is reduced, and the decrease in the reconstruction accuracy of the reconstructed image is thus suppressed.

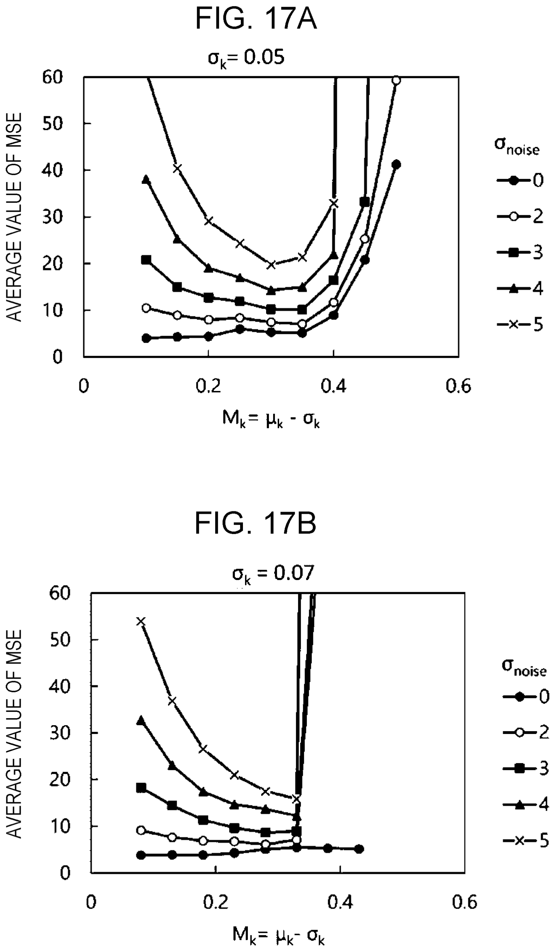

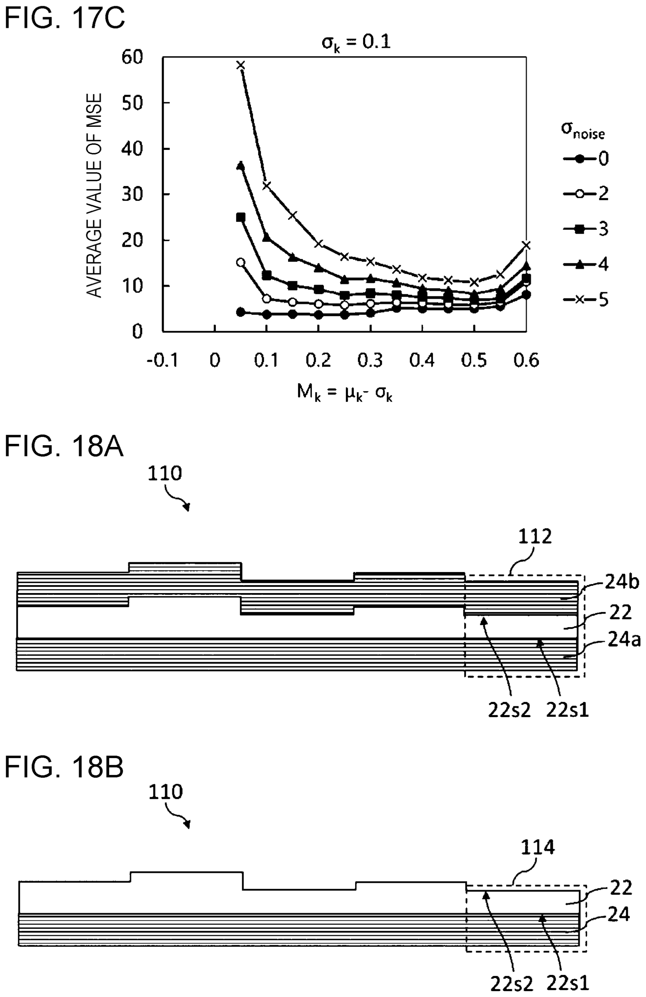

Figs. 17A to 17C are diagrams illustrating a relationship between an average value of MSE between a ground truth image and a reconstructed image regarding wavelength bands and $M_k = \mu_k - \sigma_k$ in a case where $\sigma_k = 0.05, 0.07$, and 0.1, respectively, for each of the wavelength bands. As illustrated in Figs. 17A to 17C, in a case where $M_k$ is moderately large, the decrease in the reconstruction accuracy of the reconstructed image is suppressed even when $\sigma_{noise}$ increases. Such a value of $M_k$ falls within a range from approximately 0.3 inclusive to approximately 0.5 inclusive. Actually, there exists some percent of a reconstruction error caused by other noise, such as readout noise, in addition to a reconstruction error caused by random noise. If the total of these kinds of reconstruction errors exceeds 5%, the lowness of the reconstruction accuracy of the reconstructed image could possibly be visually recognized. Therefore, a tolerable reconstruction error caused by random noise may possibly be, for example, less than or equal to 3%. In an 8-bit scale, a reconstruction error of 3% corresponds to MSE = 56. In the examples illustrated in Figs. 17A to 17C, in a case where $\sigma_{noise} = 5$, which is close to actual random noise, the lower limit of $M_k$ when the average value of MSE falls below 56 is: $M_k = 0.1$.

As can be seen from the above, in a case where $M_k \geq 0.1$ is satisfied for each of the four or more wavelength bands included in the target wavelength range, the light detection apparatus 100 has noise resistance to random noise. There is no need for $M_k$ to be equal in all of the wavelength bands. $M_k$ may be equal in some of the wavelength bands. $M_k$ may be

different in all of the wavelength bands.

Besides $M_k \geq 0.1$, the light detection apparatus 100 according to the present embodiment may have the following characteristics.

· For each of the wavelength bands, $\sigma_k \geq 0.05$. In this case, since the segregation among the pixels is easy, it is possible to improve the reconstruction accuracy of the reconstructed image.

· For each of the wavelength bands, $\mu_k \geq 0.2$. In this case, $M_k \geq 0.1$ is satisfied for $0.05 \leq \sigma_k \leq 0.1$ illustrated in Figs. 16 to 17C.

· When the maximum value of $M_k$ and the minimum value of $M_k$ are defined respectively as $M_{max}$ and $M_{min}$ for the wavelength bands, $M_{max}/M_{min} \leq 3$. In this case, it is possible to reduce variation in the reconstruction accuracy of the reconstructed image among the wavelength bands.

[4. Structure of Filter Array 110]

In the first and second examples of the light detection apparatus 100 according to the present embodiment capable of reducing the influence of noise, the filter array 110 includes filters. The transmission spectrum of at least one filter among the filters exhibits peaks in the target wavelength range. In a case where the at least one filter has a resonant structure, the peaks arise from the resonant structure.

Fig. 18A is a diagram schematically illustrating a first example of the filter array 110. The filter array 110 illustrated in Fig. 18A includes filters 112 arranged two-dimensionally. Each of the filters 112 has a resonant structure. The resonant structure includes an interference layer 22 having a first surface 22s1 and a second surface 22s2, a first reflection layer 24a provided on the first surface 22s1, and a second reflection layer 24b provided on the second surface 22s2. The interference layer 22 may be a semiconductor or a dielectric substance. The first reflection layer 24a and the second reflection layer 24b may be, for example, dielectric multilayer films. In a resonant structure that includes, as described here, the first reflection layer 24a and the second reflection layer 24b on both sides respectively with respect to the interference layer 22, the S/N ratio between the wavelength bands is high, but, on the other hand, the amount of light transmitted therethrough is small.

Fig. 18B is a diagram schematically illustrating a second example of the filter array 110. The filter array 110 illustrated in Fig. 18B includes filters 114 arranged two-dimensionally. Each of the filters 114 has a resonant structure. The resonant structure includes the interference layer 22 having the first surface 22s1 and the second surface 22s2, and a reflection layer 24 provided on the first surface 22s1. No reflection layer is provided on the second surface 22s2. In a resonant structure that includes, as described here, the reflection layer 24 on one side with respect to the interference layer 22, the amount of light transmitted therethrough is large, but, on the other hand, the S/N ratio between the wavelength bands is low. Whether to choose the resonant structure illustrated in Fig. 18A or to choose the resonant structure illustrated in Fig. 18B can be determined depending on its application and purpose.

Details of the resonant structure that includes reflection layers on both sides respectively with respect to an interference layer are disclosed in, for example, the specification of U.S. Patent Application Publication No. 2021/0341657. Details of the resonant structure that includes a reflection layer on one side with respect to an interference layer are disclosed in, for example, International Publication No. 2021/241171. The content of the disclosure in the specification of U.S. Patent Application Publication No. 2021/0341657 and the content of the disclosure in International Publication No. 2021/241171 are incorporated herein by reference in their entirety.

In a case where the light detection system 300 illustrated in Figs. 1A to 1D includes the light detection apparatus 100 described above, which is capable of reducing the influence of noise, a processing circuit included in the image processing apparatus 200 generates four or more reconstructed images corresponding respectively to four or more wavelength bands on the basis of information on the compressed image 10 and mask information. The information on the compressed image 10 can be obtained by means of a signal outputted from a light detection element included in each of pixels the number of which is N. The mask information that represents the spatial distribution of the transmittance on a wavelength-band-by-wavelength-band basis can be obtained from the transmission spectrum of the optical filter included in each of the N pixels. Using the light detection apparatus 100 described above, which is capable of reducing the influence of noise, makes it possible to reduce an increase in a reconstruction error due to the noise, in the four or more reconstructed images.

In the first and second examples of the light detection apparatus 100 described above, each of the N pixels includes a filter and a light detection element; however, each of the N pixels may include, without including a filter, a light detection element processed directly in such a way as to encode incident light. In this case, in the first example of the light detection apparatus 100, $\mu_i$ described earlier corresponds to an average value, in the target wavelength range, of the sensitivity of the i-th pixel that is based on the wavelength dependency of the detection sensitivity of the processed light detection element included in the i-th pixel.

In the second example of the light detection apparatus 100, in a case where the light in the k-th wavelength band (k = 1, 2, ..., N) among four or more wavelength bands included in the target wavelength range is incident on each of the N pixels, $\mu_k$ and $\sigma_k$ described earlier are as follows: $\mu_k$ denotes the average of N signal intensity values obtained based on the intensity of the signal outputted from the processed light detection element included in each of the N pixels, and $\sigma_k$ denotes the standard deviation of the N signal intensity values.

(Miscellaneous 1)

The present disclosure is not limited to the foregoing embodiments. The present disclosure may be construed to encompass modes modified by applying, to the foregoing embodiments, various variations which those skilled in the art can think of, unless they do not depart from the essence of the present disclosure. The embodiments of the present disclosure may be modified as in the following variation examples.

(Item 1)

A light detection apparatus, including:

an optical filter $f_i$; and
a light detector $d_i$ that detects light outputted from the optical filter $f_i$ and including i-th information on a subject, and outputs a signal $s_i$ corresponding to the i-th information, where i = 1, ..., N, where N is an integer that is greater than or equal to 2, wherein
the i-th information includes information $I_{i,1}$ on the subject corresponding to a wavelength band $W_1$, ..., and information $I_{i,M}$ on the subject corresponding to a wavelength band $W_M$, (where M is an integer that is greater than or equal to 4) the wavelength band $W_1$, ..., and the wavelength band $W_M$ are different from one another,

[Expression 13]

$$\mu\,i = \sum_{k=1}^{M}\left(T_{i,\mathrm{Wk}} I_{\mathrm{Wk}}\right)/M,$$

[Expression 1]

$$\frac{\mu_{\min}}{\left(\sum_{i=1}^{N}\mu_i/N\right)} \geqq 0.5$$

where $T_{i,\mathrm{Wk}}$ mentioned above denotes a light transmittance of the optical filter $f_i$ in the wavelength band $W_k$,
where $I_{\mathrm{wk}}$ mentioned above denotes a detection sensitivity of each of the light detector $d_1$, ..., and the light detector $d_N$ for light $I_{\mathrm{Wk}}$ corresponding to the wavelength band $W_k$,
where $\mu_{\min}$ mentioned above denotes a minimum value among $\mu_1$ mentioned above, ..., and $\mu_N$ mentioned above, and
the optical filter $f_i$ is directly in contact with the light detector $d_i$, or not both of a lens and a filter are disposed between the optical filter $f_i$ and the light detector $d_i$, and a distance between the optical filter $f_i$ and the light detector $d_i$ is greater than zero.

(Item 2)

The light detection apparatus according to Item 1 stated above, wherein

the optical filter $f_i$ receives light $\mathrm{Iin}_i$ from the subject,
the light $\mathrm{Iin}_i$ includes light $\mathrm{Iin}_{i,W1}$ corresponding to the wavelength band $W_1$, ..., and light $\mathrm{Iin}_{i,WM}$ corresponding to the wavelength band $W_M$,
when the optical filter $f_i$ receives the light $\mathrm{Iin}_i$, the optical filter $f_i$ outputs light $\mathrm{Iout}_i$,
the light $\mathrm{Iout}_i$ includes light $\mathrm{Iout}_{i,W1}$ corresponding to the wavelength band $W_1$, ..., and light $\mathrm{Iout}_{i,WM}$ corresponding to the wavelength band $W_M$, and
the transmittance $T_{i,W1}$ is (an intensity of the light $\mathrm{Iout}_{i,W1}$)/(an intensity of the light $\mathrm{Iin}_{i,W1}$), ..., and the transmittance $T_{i,WM}$ is (an intensity of the light $\mathrm{Iout}_{i,WM}$)/(an intensity of the light $\mathrm{Iin}_{i,WM}$).

(Description of Items 1 and 2)

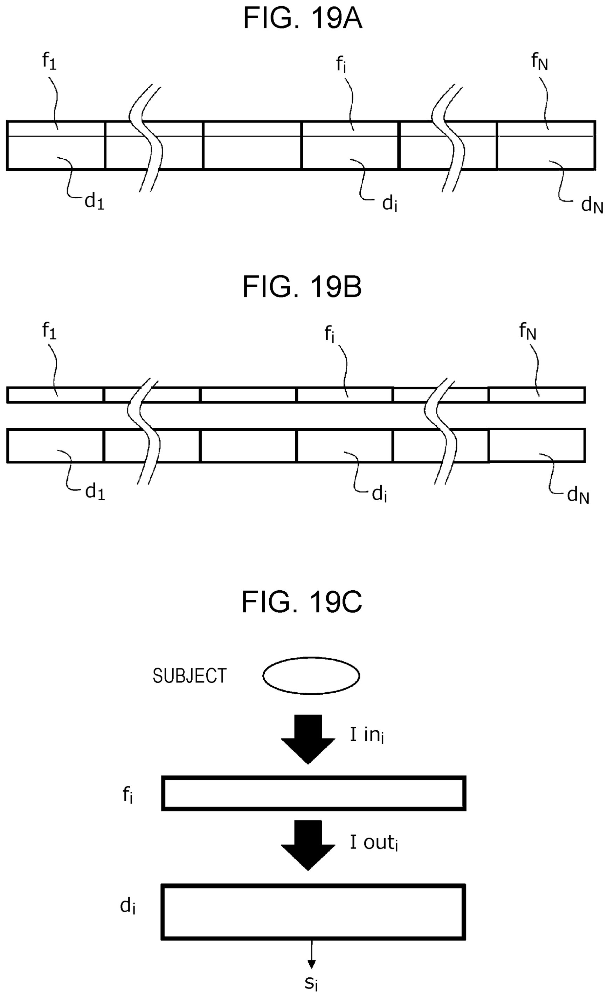

Fig. 19A illustrates an example of optical filters and light detectors. The optical filter $f_1$ is directly in contact with the light detector $d_i$, the optical filter $f_i$ is directly in contact with the light detector $d_i$, and the optical filter $f_N$ is directly in contact with the light detector $d_N$.

Fig. 19B illustrates an example of optical filters and light detectors. Not both of a lens and a filter are disposed between the optical filter $f_1$ and the light detector $d_1$, and the distance between the optical filter $f_1$ and the light detector $d_1$ is greater than zero. Not both of a lens and a filter are disposed between the optical filter $f_i$ and the light detector $d_i$, and the distance between the optical filter $f_i$ and the light detector $d_i$ is greater than zero. Not both of a lens and a filter are disposed between the optical filter $f_N$ and the light detector $d_N$, and the distance between the optical filter $f_N$ and the light detector $d_N$ is greater than zero.

Fig. 19C illustrates, when the optical filter $f_i$ receives the light $Iin_i$ from the subject, the optical filter $f_i$ outputs the light $Iout_i$, and the light detector $d_i$ outputs the signal $s_i$ upon detecting the light $Iout_i$. In Fig. 19C, the optical filter $f_i$ may be directly in contact with the light detector $d_i$.

In Item 1 stated above, "light $I_{wk}$ corresponding to the wavelength band $W_k$" may be "light $I_{Wk}$ that has wavelengths ranging from the minimum wavelength of the wavelength band $W_k$ to the maximum wavelength of the wavelength band $W_1$".

In Item 2 stated above, "light $Iin_{i,W1}$ corresponding to the wavelength band $W_1$, ..., and light $Iin_{i,WM}$ corresponding to the wavelength band $W_M$" may be "light $Iin_{i,W1}$ that has wavelengths ranging from the minimum wavelength of the wavelength band $W_1$ to the maximum wavelength of the wavelength band $W_1$, ..., and light $Iin_{i,WM}$ that has wavelengths ranging from the minimum wavelength of the wavelength band $W_M$ to the maximum wavelength of the wavelength band $W_M$".

In Item 2 stated above, "light $Iout_{i,W1}$ corresponding to the wavelength band $W_1$, ..., and light $Iout_{i,WM}$ corresponding to the wavelength band $W_M$" may be "light $Iout_{i,W1}$ that has wavelengths ranging from the minimum wavelength of the wavelength band $W_1$ to the maximum wavelength of the wavelength band $W_1$, ..., and light $Iout_{i,WM}$ that has wavelengths ranging from the minimum wavelength of the wavelength band $W_M$ to the maximum wavelength of the wavelength band $W_M$".

(Miscellaneous 2)

In the present disclosure, "to reconstruct a hyperspectral image" may mean "to generate a hyperspectral image".

The technology of the present disclosure is useful for, for example, cameras and measurement devices that acquire multi-wavelength or high-resolution images. The technology of the present disclosure can be applied also to, for example, biological sensing, medical sensing, cosmetic sensing, a food adulteration inspection system, a residual agricultural chemical inspection system, a remote sensing system, and a vehicle-mounted sensing system.

[Additional Remarks]

The following techniques are disclosed by the embodiments described above.

(Technique 1)

A light detection apparatus comprising: pixels a number of which is N,

each of the N pixels including an optical filter and a light detection element, the light detection element detecting light having passed through the optical filter, wherein
information on four or more wavelength bands included in a target wavelength range is superimposed on a signal outputted from the light detection element,
let $\mu_i$ be an average of values of an effective sensitivity of an i-th pixel (i = 1, 2, ..., N) among the N pixels in the target wavelength range based on a wavelength dependency of a transmittance of the optical filter included in the i-th pixel and a wavelength dependency of a detection sensitivity of the light detection element included in the i-th pixel, let $\mu_{min}$ be a minimum value among $\mu_1$ to $\mu_N$, and

[Expression 10]

$$\frac{\mu_{\min}}{\left(\sum_{i=1}^{N} \mu_i / N\right)} \geqq 0.5$$

This light detection apparatus can be used for a hyperspectral camera and is capable of reducing the influence of noise.

(Technique 2)

The light detection apparatus according to Technique 1, wherein

[Expression 11]

$$\frac{\mu_{\min}}{\left(\sum_{i=1}^{N} \mu_i / N\right)} \geqq 0.68$$

This light detection apparatus can be used for a hyperspectral camera and is capable of reducing the influence of noise even further.

(Technique 3)

The light detection apparatus according to Technique 1 or 2, wherein

the N pixels include more than one kind of filters having different transmission spectra from one another, the more than one kind of filters are arranged irregularly, and
the average of the values of the effective sensitivity in the target wavelength range is equal among all of the N pixels.

This light detection apparatus is versatile for various targets.

(Technique 4)

The light detection apparatus according to any of Techniques 1 to 3, wherein
a transmission spectrum of the optical filter exhibits peaks in the target wavelength range.
This light detection apparatus is capable of encoding light from the target effectively.

(Technique 5)

A light detection apparatus comprising: pixels a number of which is N,

each of the N pixels including an optical filter and a light detection element, the light detection element detecting light having passed through the optical filter, wherein
information on four or more wavelength bands included in a target wavelength range is superimposed on a signal outputted from the light detection element,
let $\mu_k$ be an average of N signal intensity values obtained based on an intensity of a signal outputted from the light detection element included in each of the N pixels when light in a k-th wavelength band (k = 1, 2, ..., N) among the four or more wavelength bands is incident on each of the N pixels, let $\sigma_k$ be a standard deviation of the N signal intensity values, let $M_k = \mu_k - \sigma_k$, and
for each of the four or more wavelength bands, $M_k \geq 0.1$.

This light detection apparatus can be used for a hyperspectral camera and is capable of reducing the influence of noise.

(Technique 6)

The light detection apparatus according to Technique 5, wherein
for each of the N wavelength bands, $\sigma_k \geq 0.05$.

In this light detection apparatus, since segregation among filters is easy, it is possible to improve the reconstruction accuracy of a hyperspectral image.

(Technique 7)

The light detection apparatus according to Technique 5 or 6, wherein
for each of the N wavelength bands, $\mu_k \geq 0.2$.

This light detection apparatus is capable of enhancing noise resistance by increasing the transmittance.

(Technique 8)

The light detection apparatus according to any of Techniques 5 to 7, wherein
for the N wavelength bands, let $M_{max}$ be a maximum value of $M_k$, let $M_{min}$ be a minimum value of $M_k$, and $M_{max}/M_{min} \leq 3$.

This light detection apparatus makes it possible to reduce variation in the reconstruction accuracy of the separated image among the wavelength bands.

(Technique 9)

A light detection system comprising:

The light detection apparatus according to any of Techniques 1 to 8; and
a processing circuit, wherein
based on image information obtained by means of the signal outputted from the light detection element included in each of the N pixels, and based on mask information that represents a spatial distribution of a transmittance, on a wavelength-by-wavelength basis, obtained from a transmission spectrum of the optical filter included in each of the N pixels, the processing circuit generates four or more images corresponding respectively to the four or more wavelength bands.

This light detection system is capable of generating a hyperspectral image with a reduction in the influence of noise.

(Technique 10)

A filter array comprising: optical filters a number of which is N, the N optical filters being used in a light detection apparatus that generates four or more images corresponding respectively to four or more wavelength bands included in a target wavelength range, wherein
let $\mu_i$ be an average of values of a transmittance of an optical filter included in an i-th pixel (i = 1, 2, ..., N) among the N optical filters in the target wavelength range, let $\mu_{min}$ be a minimum value among $\mu_1$ to $\mu_N$, and

[Expression 12]

$$\frac{\mu_{min}}{\left(\sum_{i=1}^{N} \mu_i / N\right)} \geq 0.5$$

.

This filter array can be used for a hyperspectral camera and is capable of reducing the influence of noise.

(Technique 11)

A method of manufacturing a filter array, comprising:

performing image acquisition using an image sensor for frames;

acquiring, from images corresponding respectively to the frames, information on noise relative to luminance values;
estimating, based on a reconstructed image generated from a compressed image with the noise superimposed thereon and based on a reconstructed image generated from a compressed image that is before superimposition of the noise, a relationship between the luminance values and an amount of increase in a reconstruction error; determining, based on the estimated relationship, transmission characteristics of the filter array; and manufacturing, based on the determined transmission characteristics, the filter array.

With this manufacturing method, it is possible to manufacture a filter array that can be used for a hyperspectral camera and is capable of reducing the influence of noise.

Reference Signs List

10 compressed image
20, 20W$_1$, 20W$_2$, ..., 20W$_N$ reconstructed image
70 target
100 light detection apparatus
110 filter array
112, 114 filter
140, 140A, 140B optical system
160 image sensor
200 image processing apparatus
300 light detection system

**Claims**

1.  A light detection apparatus comprising:

    pixels a number of which is N, each of the N pixels including an optical filter and a light detection element, the light detection element detecting light having passed through the optical filter, wherein
    information on four or more wavelength bands included in a target wavelength range is superimposed on a signal outputted from the light detection element,
    let $\mu_i$ be an average of values of an effective sensitivity of an i-th pixel (i = 1, 2, ..., N) among the N pixels in the target wavelength range based on a wavelength dependency of a transmittance of the optical filter included in the i-th pixel and a wavelength dependency of a detection sensitivity of the light detection element included in the i-th pixel, let $\mu_{min}$ be a minimum value among $\mu_1$ to $\mu_N$, and

    [Expression 14]

    $$\frac{\mu_{min}}{\left(\sum_{i=1}^{N} \mu_i / N\right)} \geqq 0.5$$

    .

2.  The light detection apparatus according to claim 1, wherein

    [Expression 15]

    $$\frac{\mu_{min}}{\left(\sum_{i=1}^{N} \mu_i / N\right)} \geqq 0.68$$

    .

3.  The light detection apparatus according to claim 1 or 2, wherein

the N pixels include more than one kind of filters having different transmission spectra from one another,
the more than one kind of filters are arranged irregularly, and
the average of the values of the effective sensitivity in the target wavelength range is equal among all of the N pixels.

4. The light detection apparatus according to claim 1 or 2, wherein
a transmission spectrum of the optical filter exhibits peaks in the target wavelength range.

5. A light detection apparatus comprising:

pixels a number of which is N, each of the N pixels including an optical filter and a light detection element, the light detection element detecting light having passed through the optical filter, wherein
information on four or more wavelength bands included in a target wavelength range is superimposed on a signal outputted from the light detection element,
let $\mu_k$ be an average of N signal intensity values obtained based on an intensity of a signal outputted from the light detection element included in each of the N pixels when light in a k-th wavelength band (k = 1, 2, ..., N) among the four or more wavelength bands is incident on each of the N pixels, let $\sigma_k$ be a standard deviation of the N signal intensity values, let $M_k = \mu_k - \sigma_k$, and
for each of the four or more wavelength bands, $M_k \geq 0.1$.

6. The light detection apparatus according to claim 5, wherein
for each of the N wavelength bands, $\sigma_k \geq 0.05$.

7. The light detection apparatus according to claim 5 or 6, wherein
for each of the N wavelength bands, $\mu_k \geq 0.2$.

8. The light detection apparatus according to claim 5 or 6, wherein
for the N wavelength bands, let $M_{max}$ be a maximum value of $M_k$, let $M_{min}$ be a minimum value of $M_k$, and

$$M_{max}/M_{min} \leq 3.$$

9. A light detection system comprising:

the light detection apparatus according to claim 1 or 5; and
a processing circuit, wherein
based on image information obtained by means of the signal outputted from the light detection element included in each of the N pixels, and based on mask information that represents a spatial distribution of a transmittance, on a wavelength-by-wavelength basis, obtained from a transmission spectrum of the optical filter included in each of the N pixels, the processing circuit generates four or more images corresponding respectively to the four or more wavelength bands.

10. A filter array comprising:

optical filters a number of which is N, the N optical filters being used in a light detection apparatus that generates four or more images corresponding respectively to four or more wavelength bands included in a target wavelength range, wherein
let $\mu_i$ be an average of values of a transmittance of an optical filter included in an i-th pixel (i = 1, 2, ..., N) among the N optical filters in the target wavelength range, let $\mu_{min}$ be a minimum value among $\mu_1$ to $\mu_N$, and

[Expression 16]

$$\frac{\mu_{min}}{\left(\sum_{i=1}^{N} \mu_i / N\right)} \geq 0.5$$

.

FIG. 1A

FIG. 1B

## FIG. 1C

## FIG. 1D

# FIG. 2A

110

A1

A2

# FIG. 2B

$W_1$

$W_2$

...

$W_M$

# FIG. 2C

TRANSMITTANCE

1

0.8

0.6

0.4

0.2

0

WAVELENGTH

FIG. 2D

FIG. 3A

FIG. 3B

FIG. 4A

# FIG. 4B

# FIG. 5

# FIG. 6

# FIG. 7

# FIG. 8

# FIG. 9A

$\mu_{min}/\Sigma(\mu_i/N)=0.31$    $\mu_{min}/\Sigma(\mu_i/N)=0.52$    $\mu_{min}/\Sigma(\mu_i/N)=0.76$    $\mu_{min}/\Sigma(\mu_i/N)=1$

FIG. 9B

FIG. 10A

FIG. 10B

FIG. 10C

## FIG. 11

FIG. 12

```
            ┌─────────────┐
            │    START    │
            └─────────────┘
                   │
                   ▼
┌──────────────────────────────────────┐
│    IMAGE ACQUISITION IS PERFORMED     │──── S101
│     USING IMAGE SENSOR FOR FRAMES     │
└──────────────────────────────────────┘
                   │
                   ▼
┌──────────────────────────────────────┐
│  INFORMATION ON NOISE RELATIVE TO     │──── S102
│    LUMINANCE VALUE IS ACQUIRED FROM   │
│        TEMPORAL FLUCTUATIONS          │
│         OF LUMINANCE VALUE            │
└──────────────────────────────────────┘
                   │
                   ▼
┌──────────────────────────────────────┐
│  NOISE IS SUPERIMPOSED ON COMPRESSED  │──── S103
│               IMAGE                   │
└──────────────────────────────────────┘
                   │
                   ▼
┌──────────────────────────────────────┐
│     FROM COMPRESSED IMAGE WITH NOISE  │──── S104
│  SUPERIMPOSED THEREON, HYPERSPECTRAL  │
│  IMAGE IS GENERATED USING MASK        │
│              INFORMATION              │
└──────────────────────────────────────┘
                   │
                   ▼
┌──────────────────────────────────────┐
│  RELATIONSHIP BETWEEN LUMINANCE VALUE │──── S105
│        AND AMOUNT OF INCREASE IN      │
│    RECONSTRUCTION ERROR IS ESTIMATED  │
└──────────────────────────────────────┘
                   │
                   ▼
┌──────────────────────────────────────┐
│  BASED ON RELATIONSHIP BETWEEN        │──── S106
│   LUMINANCE VALUE AND AMOUNT OF       │
│   INCREASE IN RECONSTRUCTION ERROR,   │
│   TRANSMISSION CHARACTERISTICS OF     │
│   FILTER ARRAY ARE DETERMINED         │
└──────────────────────────────────────┘
                   │
                   ▼
┌──────────────────────────────────────┐
│ BASED ON DETERMINED TRANSMISSION      │──── S107
│  CHARACTERISTICS OF FILTER ARRAY,     │
│   FILTER ARRAY IS MANUFACTURED        │
└──────────────────────────────────────┘
                   │
                   ▼
            ┌─────────────┐
            │     END     │
            └─────────────┘
```

FIG. 13A

## FIG. 13B

## FIG. 14

COMPRESSED IMAGE BEFORE NOISE SUPERIMPOSITION

RANDOM NOISE

COMPRESSED IMAGE AFTER NOISE SUPERIMPOSITION

## FIG. 15A

# FIG. 15B

# FIG. 16

# FIG. 17A

# FIG. 17B

EP 4 644 850 A1

## FIG. 17C

$\sigma_k = 0.1$

(Plot: AVERAGE VALUE OF MSE vs $M_k = \mu_k - \sigma_k$)

$\sigma_{noise}$
- 0
- 2
- 3
- 4
- 5

## FIG. 18A

## FIG. 18B

38

# FIG. 19A

$f_1$     $f_i$     $f_N$

$d_1$     $d_i$     $d_N$

# FIG. 19B

$f_1$     $f_i$     $f_N$

$d_1$     $d_i$     $d_N$

# FIG. 19C

SUBJECT

$I\ in_i$

$f_i$

$I\ out_i$

$d_i$

$s_i$

## INTERNATIONAL SEARCH REPORT

| International application No. |
| --- |
| **PCT/JP2023/041925** |

| | |
| --- | --- |
| **A.** | **CLASSIFICATION OF SUBJECT MATTER** |

*G01J 3/36*(2006.01)i; *G01J 3/51*(2006.01)i; *G02B 5/26*(2006.01)i; *G02B 5/28*(2006.01)i; *H04N 23/12*(2023.01)i; *H04N 25/70*(2023.01)i

FI:  G01J3/36; G01J3/51; H04N23/12; H04N25/70; G02B5/28; G02B5/26

According to International Patent Classification (IPC) or to both national classification and IPC

| | |
| --- | --- |
| **B.** | **FIELDS SEARCHED** |

Minimum documentation searched (classification system followed by classification symbols)

G01J3/36; G01J3/51; G02B5/26; G02B5/28; H04N23/12; H04N25/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 7142251 B2 (PANASONIC INTELLECTUAL PROPERTY MANAGEMENT CO., LTD.) 27 September 2022 (2022-09-27) paragraphs [0044]-[0121], fig. 1A-14 | 1-2, 4-10 |
| A | | 3 |
| A | JP 6952283 B1 (PANASONIC INTELLECTUAL PROPERTY MANAGEMENT CO., LTD.) 20 October 2021 (2021-10-20) paragraphs [0085]-[0112], fig. 13-24 | 1-10 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 December 2023** | **26 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/041925**

| Patent document cited in search report | | | Publication date (day/month/year) | Patent family member(s) | | | Publication date (day/month/year) |
|---|---|---|---|---|---|---|---|
| JP | 7142251 | B2 | 27 September 2022 | US | 2023/0073201 | A1 | |
| | | | | paragraphs [0070]-[0153], fig. 1A-14 | | | |
| | | | | WO | 2021/241171 | A1 | |
| | | | | EP | 4160169 | A1 | |
| | | | | CN | 115668008 | A | |
| JP | 6952283 | B1 | 20 October 2021 | US | 2021/0377498 | A1 | |
| | | | | paragraphs [0113]-[0135], fig. 13-24 | | | |
| | | | | WO | 2021/145054 | A1 | |
| | | | | EP | 4092397 | A1 | |
| | | | | CN | 113439203 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9599511 B
- US 20210341657
- US 2021241171 A